(19) Europäisches Patentamt
European Patent Office
Office européen des brevets

(11) **EP 3 308 210 B1**

(12) **EUROPÄISCHE PATENTSCHRIFT**

(45) Veröffentlichungstag und Bekanntmachung des Hinweises auf die Patenterteilung:
**13.04.2022   Patentblatt 2022/15**

(21) Anmeldenummer: **16731075.4**

(22) Anmeldetag: **13.06.2016**

(51) Internationale Patentklassifikation (IPC):
**G02B 21/00** *(2006.01)*      **G02B 5/28** *(2006.01)*

(52) Gemeinsame Patentklassifikation (CPC):
**G02B 21/0064; G02B 5/28; G02B 21/0076**

(86) Internationale Anmeldenummer:
**PCT/EP2016/063509**

(87) Internationale Veröffentlichungsnummer:
**WO 2016/198694 (15.12.2016 Gazette 2016/50)**

(54) **ABTASTMIKROSKOP**

SCANNING MICROSCOPE

MICROSCOPE À BALAYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.06.2015  LU 92740**

(43) Veröffentlichungstag der Anmeldung:
**18.04.2018   Patentblatt 2018/16**

(73) Patentinhaber: **Leica Microsystems CMS GmbH**
**35578 Wetzlar (DE)**

(72) Erfinder:
• **GUGEL, Hilmar**
**69221 Dossenheim (DE)**
• **NEUGART, Felix**
**68165 Mannheim (DE)**
• **BÖHM, Ingo**
**69115 Heidelberg (DE)**

(74) Vertreter: **Schaumburg und Partner Patentanwälte mbB**
**Postfach 86 07 48**
**81634 München (DE)**

(56) Entgegenhaltungen:
**DE-A1-102006 034 908     US-A1- 2005 017 197**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Abtastmikroskop mit einem in einem Beleuchtungsstrahlengang angeordneten Objektiv zum Fokussieren eines Beleuchtungslichtbündels auf eine Probe, einer dem Objektiv in dem Beleuchtungsstrahlengang vorgeordneten Abtasteinheit zum Ablenken des Beleuchtungslichtbündels derart, dass das durch das Objektiv fokussierte Beleuchtungslichtbündel eine Abtastbewegung auf der Probe ausführt, und einer in einem Detektionsstrahlengang angeordneten Detektionseinheit zum Empfangen eines durch die Abtasteinheit nicht abgelenkten Detektionslichtbündels, wobei die Detektionseinheit zur spektralen Beeinflussung des Detektionslichtbündels mindestens ein spektral selektives Bauelement enthält, das eine Wirkfläche aufweist, wobei die spektrale Kante der Wirkfläche mit dem Ort des Einfalls des Detektionslichtbündels auf der Wirkfläche variiert. Solche optischen Bauelemente werden auch als Verlaufsfilter oder variable Strahlteiler bzw. variable Filter bezeichnet.

Verändern sich die spektralen Eigenschaften der optischen Bauelemente im Wesentlichen linear über die Länge des optischen Bauelements, werden die variablen Strahlteiler bzw. variablen Filter auch als linear variable Strahlteiler bzw. linear variable Filter bezeichnet.

Ein Abtastmikroskop vorstehend angegebener Art wird beispielsweise in der Fluoreszenzmikroskopie eingesetzt, bei der Fluoreszenzfarbstoffe mit Hilfe eines Beleuchtungslichtbündels zur Emission von Fluoreszenzstrahlung angeregt werden. In dieser Anwendung wird Anregungslicht in Form des Beleuchtungslichtbündels in einer Abtastbewegung über die Probe geführt. Diese Abtastbewegung wird über eine dem Objektiv vorgeordnete Abtasteinheit realisiert, die üblicherweise einen oder mehrere bewegliche Abtastspiegel und eine Abtastoptik umfasst, die das Beleuchtungslichtbündel auf die Eintrittspupille des Objektivs richtet. Die durch das Beleuchtungslichtbündel in der Probe angeregte Fluoreszenzstrahlung wird durch das Objektiv zurück in das Abtastmikroskop geleitet und in Form eines Detektionslichtbündels einer Detektionseinheit zugeführt, die üblicherweise verschiedene Linsen zum Formen und Umlenken des Detektionslichtbündels sowie einen Detektor enthält, der das Detektionslichtbündel schließlich erfasst.

Während in der Konfokalmikroskopie üblicherweise mit sogenannten Descanned-Detektoren gearbeitet wird, kommen in anderen Mikroskopieanwendungen wie etwa der Multiphotonenmikroskopie, der Lichtblatt- bzw. Lichtscheibenmikroskopie oder der Multispot- bzw. Multifokimikroskopie sogenannte Non-Descanned-Detektoren (NDD) zum Einsatz. Ein Descanned-Detektor empfängt das Detektionslichtbündel erst, nachdem es zurück auf die Abtasteinheit geleitet und von dieser wieder in ein ortsfestes Detektionslichtbündel umgewandelt worden ist. Ein solches ortsfestes Lichtbündel stellt auch das Beleuchtungslichtbündel dar, bevor es auf die Abtasteinheit trifft. Demgegenüber empfängt ein Non-Descanned-Detektor das Detektionslichtbündel, ohne dass dieses zuvor wieder der Abtasteinheit zugeführt worden ist. Somit gelangt das Detektionslichtbündel ohne Beeinflussung durch die Abtasteinheit zum Detektor.

In der Multiphotonenmikroskopie werden durch nichtlineare Effekte nur Fluoreszenzfarbstoffe in einem räumlich eng begrenzten Anregungsfokus, der durch das auf die Probe fokussierte Beleuchtungslichtbündel entsteht, zur Emission von Fluoreszenzstrahlung angeregt. Die gesamte Fluoreszenzstrahlung, die aus dem Anregungsfokus stammt, kann nun unter Berücksichtigung der bekannten Position des Anregungsfokus von dem Non-Descanned-Detektor erfasst werden. Indem das Beleuchtungslichtbündel in einer Abtastbewegung über die Probe geführt wird, kann so im Ergebnis ein dreidimensionales Probenbild erzeugt werden.

In dem Detektionsstrahlengang eines Abtastmikroskops befinden sich üblicherweise verschiedene Strahlteiler und Filter, die das Detektionslichtbündel in der gewünschten Weise spektral beeinflussen. So können Strahlteiler beispielsweise eingesetzt werden, um das Detektionslichtbündel wellenlängenabhängig in verschiedene Teilstrahlen aufzuspalten, die dann verschiedenen Detektionskanälen, die jeweils einen eigenen Detektor beinhalten, zugeführt werden. Über optische Filter kann für jeden Detektor der zu erfassende Wellenlängenbereich festgelegt werden.

Als Detektoren können insbesondere Punktdetektoren (z.B. Photomultiplier, Avalanche Photomultiplier oder Hybrid-Photodetektoren), Zeilendetektoren oder Flächendetektoren bzw. Array-Detektoren (z.B. CCD, EMCCD, CMOS, sCMOS, oder QIS (Quanta Image Sensor)) verwendet werden.

In der Konfokalmikroskopie kommen mittlerweile auch sogenannte Spektraldetektoren zum Einsatz, die es dem Benutzer ermöglichen, die zu erfassenden Wellenlängenbereiche vor der Bildaufnahme frei zu wählen. Bei einem solchen Spektraldetektor wird das Detektionslichtbündel z.B. mittels eines Prismas in seine spektralen Anteile zerlegt und daraus die zu erfassenden Wellenlängenbereiche selektiert.

Demgegenüber ist der Einsatz solcher flexibel einsetzbarer Spektraldetektoren in Non-Descanned-Anwendungen bisher nicht ohne weiteres möglich, da dort das Detektionslichtbündel in der Detektionseinheit eine Abtastbewegung ausführt, die in der konfokalen Anwendung durch die Rückführung des Detektionslichtbündels auf die Abtasteinheit nicht auftritt. Non-Descanned-Detektoren werden deshalb bislang mit herkömmlichen Interferenzfiltern bzw. Interferenzstrahlteilern ausgestattet, deren spektrale Charakteristiken festgelegt, d.h. durch den Benutzer während des Experiments nicht veränderbar sind.

In der DE 10 2006 034 908 A1 wird vorgeschlagen, in einem Abtastmikroskop ein spektral selektives Bauelement in Form eines Kantenfilter einzusetzen, dessen Grenzwellenlänge, auch als spektrale Kante bezeichnet, längs des Filters variiert (Verlaufsfilter). Dabei trennt die spektrale Kante des Filters einen Wellenlängenbereich der Transmission von einem Wellenlängenbereich, in dem keine Transmission stattfindet.

Die Verwendung eines solchen Kantenfilters mit örtlich variabler spektraler Kante ermöglicht es dem Benutzer, die spektrale Charakteristik des Detektors nach Wunsch einzustellen. Jedoch treten hierbei auch Probleme auf, die in der DE 10 2006 034 908 A1 nicht angesprochen sind. So kann eine ausreichend steile spektrale Kante, d.h. eine ausreichend scharfe Grenzwellenlänge, nur dann realisiert werden, wenn das auf den Filter fallende Detektionslichtbündel einen hinreichend kleinen Durchmesser hat. Jede Zunahme des Bündeldurchmessers führt zwangsläufig zu einer Abnahme der Kantensteilheit. Je geringer die Kantensteilheit ist, desto unpräziser ist die spektrale Charakteristik des Detektors.

Außerdem hängt die spektrale Kantenlage des Filters vom Einfallswinkel ab, unter dem das Detektionslichtbündel auf den Filter fällt. Dies wirkt sich insbesondere bei einem Non-Descanned-Detektor nachteilig aus, bei dem der Einfallswinkel des Detektionslichtbündels infolge der Abtastbewegung des Beleuchtungslichtbündels variiert.

Die Druckschrift US 2005/0017197 A1 offenbart ein Abtastmikroskop mit einem in einem Beleuchtungsstrahlengang angeordneten Objektiv, das ein Beleuchtungslichtbündel auf eine Probe fokussiert. Mittels einer in dem Beleuchtungsstrahlengang dem Objektiv vorgeordneten Abtasteinheit wird das Beleuchtungslichtbündel derart abgelenkt, dass das durch das Objektiv fokussierte Beleuchtungslichtbündel eine Abtastbewegung auf die Probe ausführt. Mit Hilfe eines Kondensors, der sich bezüglich des Beleuchtungsobjektivs auf der anderen Seite der Probe befindet, wird ein Detektionslichtbündel in einen Detektionsstrahlengang geleitet, in dem sich ein aus einem Kurzpassfilter und einem Langpassfilter gebildeter Bandpassfilter befindet. In einer ersten Ausführungsform ist der Bandpassfilter senkrecht und in einer zweiten Ausführungsform schräg zur optischen Achse des Detektionsstrahlengangs angeordnet. Der Kurzpassfilter und der Langpassfilter sind jeweils als spektraler Verlaufsfilter ausgeführt.

Aufgabe der vorliegenden Erfindung ist es, ein Abtastmikroskop eingangs genannter Art so weiterzubilden, dass in einer Non-Descanned-Anwendung eine flexible und zugleich präzise Festlegung der spektralen Charakteristik der Detektionseinheit möglich ist.

Die Erfindung löst diese Aufgabe durch das Abtastmikroskop mit den Merkmalen des Anspruchs 1. Vorteilhafte Weiterbildungen sind in den Unteransprüchen angegeben.

Die Erfindung sieht in einer ersten Alternative vor, die Wirkfläche des spektral selektiven Bauelementes in dem Detektionsstrahlengang am Ort eines Bildes einer Objektivpupille anzuordnen. In einer zweiten Alternative sieht die Erfindung demgegenüber vor, die Wirkfläche des spektral selektiven Bauelementes in dem Detektionsstrahlengang an einer Stelle anzuordnen, an der eine Variation der spektralen Kante der Wirkfläche, die durch eine infolge der Abtastbewegung des Beleuchtungslichtbündels auftretenden Variation des Einfallswinkels, unter dem das Detektionslichtbündel auf die Wirkfläche fällt, verursacht ist, zumindest teilweise durch eine gegenläufige Variation der spektralen Kante der Wirkfläche kompensiert ist, die durch eine Variation des Ortes, an dem das Detektionslichtbündel auf die Wirkfläche fällt, verursacht ist. Dabei lässt sich die spektrale Kante, d.h. die Grenzwellenlänge zwischen Reflexion und Transmission, beispielsweise als diejenige Wellenlänge definieren, bei der die Transmission gerade 50% beträgt. Es versteht sich aber von selbst, dass die spektrale Kante auch in anderer Weise definiert werden kann.

Mit anderen Worten betrifft die vorliegende Erfindung nach Anspruch 1 ein Abtastmikroskop mit einem in einem Beleuchtungsstrahlengang angeordneten Objektiv zum Fokussieren eines Beleuchtungslichtbündels auf eine Probe. In dem Beleuchtungsstrahlengang ist dem Objektiv eine Abtasteinheit zum Ablenken des Beleuchtungslichtbündels derart vorgeordnet, dass das von dem Objektiv fokussierte Beleuchtungslichtbündel eine Abtastbewegung relativ zur Probe ausführt. Das Abtastmikroskop umfasst eine in einem Detektionsstrahlengang angeordnete Detektionseinheit zum Empfangen eines Detektionslichtbündels. Dieser Detektionsstrahlengang ist derart ausgebildet, dass das Detektionslichtbündel nicht durch die Abtasteinheit abgelenkt wird und somit gelangt das Detektionslichtbündel dieses Detektionsstrahlengangs nicht zur Abtasteinheit. Insoweit handelt es sich bei diesem Detektionsstrahlengang um einen bewegten bzw. scannenden Detektionsstrahlengang, da das Detektionslichtbündel eine Abtastbewegung ausführt. Die Detektionseinheit enthält zur spektralen Beeinflussung des Detektionslichtbündels mindestens ein spektral selektives Bauelement, das eine Wirkfläche mit einer spektralen Kante aufweist. Die spektrale Kante variiert mit dem Ort des Einfalls des Detektionslichtbündels auf der Wirkfläche.

Unter der Variation der spektralen Kante im Sinn der vorliegenden Erfindung ist insbesondere zu verstehen, dass in Abhängigkeit des Orts des Auftreffens des Detektionslichtbündels auf die Wirkfläche des spektral selektiven Bauelements der spektrale Anteil des an dem spektral selektiven Bauelement reflektierten und/oder transmittierten Detektionslichtbündels verändert wird.

Gemäß der ersten Alternative ist die Wirkfläche des spektral selektiven Bauelementes in dem Detektionsstrahlengang am Ort eines Bildes einer Objektivpupille angeordnet. Gemäß der zweiten Alternative ist die Wirkfläche des spektral selektiven Bauelementes in dem Detektionsstrahlengang an einer anderen Stelle des Detektionsstrahlengangs angeordnet. Die andere Stelle des Detektionsstrahlengangs ist in dem bewegten bzw. scannenden Detektionsstrahlengang vorgesehen, an welcher das Detektionslichtbündel eine Abtastbewegung ausführt, und das spektral selektive Bauelement kann hierbei derart angeordnet sein, dass eine durch die Abtastbewegung des Detektionslichtbündels hervorgerufene Variation des Orts des Einfalls des Detektionslichtbündels auf der Wirkfläche des spektral selektiven Bauelementes - was in der Regel auch eine Variation des Einfallswinkels des Detektionslichtbündels relativ zur Wirkfläche des spektral selektiven Bauelementes hervorruft - zumindest teilweise durch eine gegenläufige Variation der spektralen Kante der Wirkfläche kompensiert ist.

Die vorstehend genannte erste Alternative ist insbesondere dann gewinnbringend anwendbar, wenn das spektral selektive Bauelement mit seiner Wirkfläche senkrecht zur optischen Achse des Detektionsstrahlengangs angeordnet ist und der maximale Einfallswinkel (bezogen auf die optische Achse), unter dem das Detektionslichtbündel infolge seiner durch die Abtastung hervorgerufenen Kippbewegung auf die Wirkfläche des Bauelementes fällt, nicht zu groß ist. In diesem Fall wird durch die Anordnung des spektral selektiven Bauelementes am Ort des Pupillenbildes eine Verschiebung der spektralen Kante infolge einer Variation des Lichteinfallsortes auf der Wirkfläche vermieden, während die durch eine Variation des Einfallswinkels hervorgerufene Verschiebung der spektralen Kante vergleichsweise gering und damit tolerierbar ist. Typischerweise gilt dies für Einfallswinkel, die gleich oder kleiner als 35°, insbesondere gleich oder kleiner als 30°, ganz insbesondere gleich oder kleiner als 20° sind.

Die zweite erfindungsgemäße Alternative ist insbesondere dann von Vorteil, wenn die durch die Abtastbewegung hervorgerufenen Einfallswinkel auf dem spektral selektiven Bauelement so groß sind, dass die einfallswinkelabhängige Kantenlagenverschiebung nicht länger tolerierbar ist. In diesem Fall sieht die Erfindung vor, die Wirkfläche des spektral selektiven Bauelementes in dem Detektionsstrahlengang so anzuordnen, dass sie relativ zum Ort des Pupillenbildes längs der optischen Achse versetzt ist. Durch diese relativ zum Ort des Pupillenbildes versetzte Anordnung der Wirkfläche ändert sich infolge der Kippbewegung des Detektionslichtbündels dessen Einfallsort auf der Wirkfläche. Diese Variation des Einfallsortes führt wiederum zu einer Verschiebung der Kantenlage, die dann genutzt werden kann, die einfallswinkelabhängige Kantenlagenverschiebung weitgehend zu kompensieren.

Mit anderen Worten wird die Variation der Kantenlage in Abhängigkeit des Einfallswinkels durch einen geeigneten Dispersionsverlauf des spektral selektiven Bauelementes kompensiert, wobei unter "Dispersion" die Änderung der spektralen Kante pro Strecke auf der Wirkfläche des Bauelementes zu verstehen ist.

Um diese Kompensation zu ermöglichen, ist die Wirkfläche des spektral selektiven Bauelementes nicht senkrecht, sondern schräg zur optischen Achse des Detektionsstrahlengangs angeordnet. Diese Schrägstellung bewirkt, dass sich im Unterschied zu einer senkrechten Ausrichtung die Lage der spektralen Kante monoton mit dem Einfallswinkel ändert. Dadurch ist es möglich, die einfallswinkelabhängige Kantenlagenverschiebung durch die ebenfalls monoton verlaufende, gegenläufige Kantenlagenverschiebung zu kompensieren, die infolge der Variation des Lichteinfallsortes auf der Wirkfläche des spektral selektiven Bauelementes auftritt.

Die spektral selektiven Bauelemente werden vorzugsweise im Strahlengang so angeordnet, dass die Reflexionsebene, d.h. die Ebene, die durch den einfallenden und reflektierten Strahl aufgespannt wird, parallel zur Variationsachse V des spektral selektiven Bauelements liegt.

Vorzugsweise weist die Wirkfläche des spektral selektiven Bauelementes längs der optischen Achse des Detektionsstrahlengangs einen Abstand $\Delta z$ zum Ort des Bildes der Objektivpupille auf, der in Abhängigkeit der Variation des Einfallswinkels und damit des Scanwinkels des Detektionslichtbündels sowie der Dispersion des spektral selektiven Bauelements vorbestimmt ist. Die Größe $\Delta z$ bezeichnet also den Abstand der Wirkfläche des spektral selektiven Bauelementes zum Ort des Bildes der Objektivpupille längs der optischen Achse des Detektionsstrahlengangs, wobei das spektral selektive Bauelement im Abstand $\Delta z$ vor oder nach dem Ort des Abbildes der Objektivpupille liegen kann. Es können auch gleichzeitig mehrere spektral selektive Elemente eingesetzt werden, die teilweise vor und teilweise nach dem Ort des Abbildes der Objektivpupille angeordnet werden können.

Hierbei und im Folgenden ist der Scanwinkel der Winkel zwischen Detektionslichtbündel und optischer Achse. Für Scanwinkel wird im Folgenden das Symbol $\vartheta$, ggf. in Kombination mit einem Subskript, verwendet. Scanwinkel gegen den Uhrzeigersinn werden im Rahmen dieser Anmeldung mit positiven Zahlen ausgedrückt ($\vartheta > 0$), Scanwinkel im Uhrzeigersinn mit negativen ($\vartheta < 0$). Der Winkelbereich aller benutzten Scanwinkel wird auch als Scanwinkelbereich bezeichnet.

Des Weiteren sei im Fall einer schrägen Anordnung der Wirkfläche zur optischen Achse des Detektionsstrahlengangs ohne Einschränkung der Allgemeinheit (wie in den Figuren dargestellt) die Wirkfläche unter einem Winkel $\varphi > 0$ zur optischen Achse so angeordnet, dass für positive Scanwinkel $\vartheta$ der Abstand zwischen dem Ort des Bildes der Objektivpupille und dem Lichteinfallsort auf der Wirkfläche kleiner ist als für negative Scanwinkel $\vartheta$. Aus diesem Winkel $\varphi$ und dem Scanwinkel $\vartheta$ lässt sich der Einfallswinkel des Detektionslichtbündels bestimmen.

Der vorstehend genannte Abstand $\Delta z > 0$ ist dann vorzugsweise derart vorbestimmt, dass für alle Scanwinkel $\vartheta \neq 0$ die folgende Bedingung erfüllt ist:

$$\Delta z \leq 2\ \frac{ES(\vartheta,\varphi)}{ED}\ \frac{sin(\vartheta+\varphi)}{sin\,(\vartheta)}, \qquad (1)$$

vorzugsweise

$$0{,}2 \; \frac{ES(\vartheta,\varphi)}{ED} \; \frac{sin(\vartheta+\varphi)}{sin\,(\vartheta)} \le \Delta z \le 1{,}7 \; \frac{ES(\vartheta,\varphi)}{ED} \; \frac{sin(\vartheta+\varphi)}{sin\,(\vartheta)} \, ,$$

besonders vorzugsweise

$$0{,}5 \; \frac{ES(\vartheta,\varphi)}{ED} \; \frac{sin(\vartheta+\varphi)}{sin\,(\vartheta)} \le \Delta z \le 1{,}5 \; \frac{ES(\vartheta,\varphi)}{ED} \; \frac{sin(\vartheta+\varphi)}{sin\,(\vartheta)} \, ,$$

worin

$ES(\vartheta, \varphi)$ die bei dem Scanwinkel $\vartheta$ und dem Winkel $\varphi$ auftretende Variation der spektralen Kante der Wirkfläche am Einfallsort des Strahlenbündels auf der optischen Achse bezeichnet,
($ES(\vartheta, \varphi)$ kann auch negative Werte annehmen) und
$ED$ die Änderung der spektralen Kante pro Strecke auf der Wirkfläche bezeichnet.

Vorzugsweise ist der Abstand $\Delta z$ derart vorbestimmt, dass die Abweichung der spektralen Kante von der gewünschten Kantenposition für alle Scanwinkel möglichst minimal ist, die einfallswinkelabhängige Kantenlagenverschiebung also bestmöglich kompensiert wird.

In diesem Fall existiert ein Scanwinkel $\vartheta_0$, der die folgende Bedingung erfüllt:

$$\Delta z = \; \frac{ES(\vartheta_0,\varphi)}{ED} \; \frac{sin(\vartheta_0+\varphi)}{sin\,(\vartheta_0)} \qquad (2)$$

Der Winkel $\vartheta_0$ ist also der Scanwinkel, bei dem eine Verschiebung der Kantenlage aufgrund der Variation des Einfallsortes durch die einfallswinkelabhängige Kantenlagenverschiebung kompensiert ist und gleichzeitig die Abweichungen von der Kompensation im gesamten Scanwinkelbereich in Näherung optimiert sind. Der Winkel $\vartheta_0$ liegt innerhalb des Scanwinkelbereiches.

Die vorstehend erläuterte Schrägstellung der Wirkfläche des spektral selektiven Bauelementes wird vorzugsweise in der Weise realisiert, dass die Flächennormale der Wirkfläche zur optischen Achse des Detektionsstrahlengangs um einen vorbestimmten Winkel geneigt ist.

Der vorstehend genannte Winkel ist vorzugsweise gleich oder kleiner als 65° (beispielsweise 45°) und in einer besonders bevorzugten Ausführung liegt der vorstehend genannte Winkel in einem Bereich von 20° bis 40°. Der Wahl dieses Winkelbereichs liegen folgende Überlegungen zugrunde: Um eine hohe Kantensteilheit zu erzielen, muss der Strahldurchmesser am Ort des spektral selektiven Bauelementes möglichst klein sein. Ferner existiert die Forderung nach möglichst großen Scanfeldern, d.h. großen Scanwinkeln, was große numerische Aperturen der in der Detektoreinheit verwendeten Abbildungsoptiken zur Folge hat. Große Aperturen sind von Vorteil ebenso wie kleine Einfallswinkel am spektral selektiven Bauelement, da diese die Kantensteilheit ebenfalls verbessern.

Um die erfindungsgemäße Anordnung zu optimieren, können Abstände zur Pupille, Aperturen und Durchmesser der verwendeten Abbildungsoptiken sowie die Dispersion und die Einfallswinkel so variiert werden, dass eine Kollision der optischen Elemente ausgeschlossen ist. Insbesondere hat sich herausgestellt, dass bei zu großen Einfallswinkeln und zu großen Abständen des spektral selektiven Bauelementes zur Pupille Kollisionen mit der im Lichtweg nachgeordneten Abbildungsoptik auftreten können. Des Weiteren hat sich gezeigt, dass insbesondere dann, wenn große numerische Aperturen beibehalten werden sollen, zu kleine Einfallswinkel zu Kollisionen mit optischen Elementen führen können, die dem spektral selektiven Bauelement im Lichtweg in Reflexion unmittelbar vor- bzw. nachgeordnet sind. Werden zwei spektral selektive Bauelemente vor und hinter einer Pupille angeordnet, so treten zwischen diesen Elementen insbesondere dann Kollisionen auf, wenn der jeweilige Abstand des Bauelementes zur Pupille klein und gleichzeitig der Einfallswinkel groß ist.

Vor dem Hintergrund vorstehender Erwägungen wurde erkannt, dass es unter der Maßgabe der Beibehaltung großer numerischer Aperturen günstig ist, den Einfallswinkel des Detektionslichtes auf die Wirkfläche des spektral selektiven Bauelementes zwischen etwa 20° und etwa 40° einzustellen. Aufgrund der geringeren Abhängigkeit der Kantenlage vom Einfallswinkel kann so die Dispersion des jeweiligen Bauelementes und somit dessen Länge verringert werden. Zudem ist es möglich, den Bauraum zwischen den optischen Elementen groß zu halten, um die angesprochenen Kollisionen zu vermeiden.

Die Wirkfläche des spektral selektiven Bauelementes ist beispielsweise derart ausgebildet, dass ihre spektrale Kante im Wesentlichen linear mit dem Einfallswinkel, unter dem das Detektionslichtbündel auf die Wirkfläche fällt, variiert.

Dies ermöglicht eine besonders einfache Kompensation der einfallswinkelabhängigen Kantenlagenverschiebung durch eine gegenläufige Kantenlagenverschiebung, die durch eine Variation des Lichteinfallsortes auf der Wirkfläche verursacht wird.

Bei Anwendung des spektral selektiven Bauelements als Kurzpass- oder Langpassfilter ist eine lineare Änderung der spektralen Kante mit dem Ort des Einfalls von Vorteil. Die Erfindung ist jedoch nicht auf eine lineare Änderung der spektralen Kante mit dem Ort des Einfalls des Detektionslichtbündels beschränkt. Insbesondere für den Fall, dass das spektral selektive Bauelement als Strahlteiler verwendet wird, ist auch eine nichtlineare Variation der spektralen Kante denkbar, z.B. eine quadratische Variation, eine exponentielle Variation oder eine Variation anderer Art.

Die Wirkfläche des spektral selektiven Bauelementes kann auch derart ausgebildet sein, dass ihre spektrale Kante in einer zu der genannten Variationsachse senkrechten Richtung mit dem Ort des Einfalls des Detektionslichtbündels variiert. Diese Ausführungsform berücksichtigt in vorteilhafter Weise den Umstand, dass bei einem Abtastmikroskop der erfindungsgemäßen Art die Probe üblicherweise zweidimensional abgerastert wird. Der tatsächliche Einfallswinkel des Detektionslichtbündels auf dem spektral selektiven Bauelement berechnet sich in diesem Fall aus dem Kreuzprodukt von zwei Scanwinkeln, die in dem resultierenden Bild beispielsweise auf eine Achse x und eine hierzu senkrechte Achse y Bezug nehmen. Die Achse x korrespondiert mit der vorstehend genannten Variationsachse. Entsprechend korrespondiert eine zu der Variationsachse senkrecht liegende Achse mit der y-Achse. Das zweidimensionale Abrastern der Probe hat somit eine Abhängigkeit der spektralen Kantenlage auf der Wirkfläche nicht nur in Richtung der genannten Variations- oder Dispersionsachse zur Folge, sondern auch in einer Richtung senkrecht zu dieser. Durch eine geeignete Variation der spektralen Kante in dieser senkrechten Richtung lässt sich eine Änderung der spektralen Kante, die durch die Änderung des auf die y-Achse bezogenen Einfallswinkels verursacht wird, effektiv kompensieren. Beispielsweise kann das spektral selektive Bauelement so ausgebildet sein, dass auf seiner Wirkfläche Linien gleicher spektraler Kantenlage nicht geradlinig senkrecht zur Variations- oder Dispersionsachse verlaufen, sondern in geeigneter Weise gekrümmt.

Vorzugsweise ist der entsprechend der Abtastbewegung des Beleuchtungslichtbündels variierende Einfallswinkel, unter dem das Detektionslichtbündel auf die Wirkfläche des spektral selektiven Bauelementes fällt, auf einen Winkelbereich beschränkt, in dem der Ort des Einfalls des Detektionslichtbündels auf der Wirkfläche im Wesentlichen linear mit dem Einfallswinkel variiert. Hierbei kann der Winkelbereich, innerhalb dessen der Einfallswinkel variiert, umso größer sein, je kleiner der Winkel ist, den die Flächennormale der Wirkfläche mit der optischen Achse des Detektionsstrahlengangs einschließt.

Vorzugsweise umfasst das mindestens eine spektral selektive Bauelement mindestens einen Strahlteiler und/oder mindestens einen Kantenfilter. Der Kantenfilter kann dabei mindestens einen Kurzpassfilter, mindestens einen Langpassfilter und/oder mindestens einen Bandpassfilter umfassen.

Vorzugsweise ist ein solcher Bandpassfilter aus einem Kurzpassfilter und einem Langpassfilter gebildet, die längs der optischen Achse des Detektionsstrahlengangs hintereinander angeordnet sind.

Um den Aufbau kompakter zu gestalten, kann es vorteilhaft sein, mehrere spektral selektive Bauelemente mit unterschiedlichen Filter- bzw. Teilerbereichen hintereinander anzuordnen: So ist es beispielsweise möglich, ein erstes Substrat vorzusehen, das einen ersten Filter- bzw. Teilerbereich aufweist, in dem die spektrale Kante von einem minimalen Wert bis zu einem mittleren Wert variiert. Ferner kann ein zweites Substrat vorgesehen werden, das einen Filterbzw. Teilerbereich aufweist, innerhalb dessen die spektrale Kante ausgehend von dem vorstehend genannten mittleren Wert zu einem maximalen Wert variiert. Das erste und das zweite Substrat können dann in dem Detektionsstrahlengang hintereinander angeordnet und in der Weise verwendet werden, dass dasjenige Substrat, das den gewünschten Detektionswellenlängenbereich bzw. die gewünschte spektrale Kante beinhaltet, in den Detektionsstrahlengang gefahren wird, während das andere Substrat aus dem Strahlengang entfernt wird. Zusätzlich können diese Substrate auch Bereiche mit wellenlängenunabhängiger hoher Transmission beinhalten. Dies ermöglicht, dass alternativ zum Entfernen eines Substrates aus dem Strahlengang auch der Bereich mit der wellenlängenunabhängig hohen Transmission in den Strahlengang gefahren werden kann bzw. darin verbleiben kann.

Für den Fall, dass das spektral selektive Element senkrecht bzw. nahezu senkrecht zur optischen Achse steht, ist in einer besonders bevorzugten Ausführung die Wirkfläche des spektral selektiven Bauelementes derart ausgebildet, dass ihre spektrale Kante längs einer Variationsachse linear mit dem Ort des Einfalls des Detektionslichtbündels variiert. In dieser Ausführungsform ist das Bauelement beispielsweise ein linear variabler Kantenfilter.

Beispielsweise enthält die Detektionseinheit ein dem spektral selektiven Bauelement in dem Detektionsstrahlengang vorgeordnete Optik, die in einer zur Variationsachse parallelen Richtung eine andere optische Wirkung als in einer zur Variationsachse senkrechten Richtung hat. Eine solche Optik könnte beispielsweise eine astigmatische Optik, insbesondere eine Zylinderoptik sein, die in den genannten Richtungen unterschiedliche Brechkräfte aufweist. So kann eine Zylinderoptik beispielsweise so ausgeführt sein, dass sie das Detektionslichtbündel nur in der zur Variationsachse parallelen Richtung kollimiert, während sie das Lichtbündel in der hierzu senkrechten Richtung divergent belässt, um die Einfallswinkel auf die Wirkfläche des spektral selektiven Bauelementes klein zu halten. Denkbar ist auch eine Optik, die in den Richtungen parallel und senkrecht zur Variationsachse für unterschiedliche Abbildungsverhältnisse sorgt.

Dadurch kann das auf das spektral selektive Bauelement fallende Detektionslichtbündel beispielsweise derart beeinflusst werden, dass es auf der Wirkfläche des spektral selektiven Bauelementes einen Lichtfleck in Form einer Ellipse erzeugt, deren Ausdehnung in der Richtung senkrecht zur Variationsachse größer ist als in der zur Variationsachse parallelen Richtung. Dadurch kann die ohnehin geringe Kantenlagenverschiebung, die in der Richtung senkrecht zur Variationsachse auftritt, weiter verringert werden.

Vorzugsweise hat die Detektionseinheit einen modularen Aufbau mit mindestens zwei Detektionsmodulen, wobei das mindestens eine spektral selektive Bauelement mindestens einen Strahlteiler umfasst, der das Detektionslichtbündel spektral separiert den beiden Detektionsmodulen zuführt. Ein solcher modularer Aufbau ermöglicht es, das erfindungsgemäße Abtastmikroskop flexibel an die jeweils gewünschte Anwendung anzupassen.

Um den Ort des Einfalls des Detektionslichtbündels auf der Wirkfläche zu ändern, ist das spektral selektive Bauelement vorzugsweise mittels eine Antriebs verstellbar. Hat die Wirkfläche des Bauelementes beispielsweise die Form eines Rechtecks, so kann die Wirkfläche mittels eines entsprechenden Antriebs längs der parallel zur langen Seite dieses Rechtecks verlaufenden Variationsachse verstellt werden, um die gewünschte spektrale Kante einzustellen. Hat dagegen der Verlauf der Dispersion die Form eines Kreises, so kann die Wirkfläche mittels des Antriebs gedreht werden, um die Kantenlage einzustellen.

Vorzugsweise kann die Position der Wirkfläche z.B. mittels eines mechanischen, pneumatischen, elektrischen oder auf dem piezoelektrischen Effekt basierenden Antriebs verstellt werden. So könnten beispielsweise Elektromotoren eingesetzt werden, um die gewünschte Position einzustellen. Eine solche Einstellung könnte durch den Benutzer mittels einer Software vorgenommen werden. Es ist aber auch vorstellbar, einen solchen Antrieb automatisiert zu betreiben. Auch wäre es denkbar, die spektral selektiven Bauelemente entlang der optischen Achse verschiebbar zu gestalten, um eine flexible Anpassung des Abstandes Δz zwischen Wirkfläche des spektral selektiven Bauelementes und Ort des Bildes der Objektivpupille längs der optischen Achse des Detektionsstrahlengangs zu ermöglichen. Eine solche Verschiebung kann erneut vorzugsweise durch die oben genannten Antriebsarten erfolgen und ebenso automatisiert erfolgen. In allen oben genannten Fällen können die Antriebe basierend auf einem festen Programmablauf oder auch einer Regelung, die auf bestimmte Messdaten wie Lichtintensität oder Strahlposition reagiert, angesteuert werden. Hierbei ist es denkbar, dass die Antriebe die Positionen vor oder auch während einer Messung anpassen. Hierdurch wäre es beispielsweise möglich, verbliebene Verschiebungen der Kantenposition dynamisch auszugleichen.

Das erfindungsgemäße Abtastmikroskop bietet gegenüber herkömmlichen Systemen, die üblicherweise mit Interferenzfiltern arbeiten und bei denen die spektralen Eigenschaften über den Filter räumlich konstant sind, den erheblichen Vorteil, dass sich durch eine geeignete Einstellung der in dem Abtastmikroskop eingesetzten spektral selektiven Bauelemente die spektralen Eigenschaften jedes einzelnen Detektionskanals durch den Benutzer erst kurz vor bzw. während der Bildaufnahme festlegen lassen. Dieser Vorteil wird umso deutlicher, je mehr Detektionskanäle vorgesehen sind. Vor diesem Hintergrund weist die Detektionseinheit in einer ganz bevorzugten Ausführungsform eine Strahlteilerkaskade, die zumindest einen ersten Strahlteiler und einen zweiten Strahlteiler umfasst, sowie zumindest ein erstes Detektionsmodul, ein zweites Detektionsmodul und ein drittes Detektionsmodul auf, wobei der erste Strahlteiler das Detektionslichtbündel spektral separiert durch Transmission dem ersten Detektionsmodul und durch Reflexion dem zweiten Strahlteiler zuführt, und der zweite Strahlteiler das durch den ersten Strahlteiler reflektierte Detektionslichtbündel spektral separiert durch Transmission dem zweiten Detektionsmodul und durch Reflexion direkt oder indirekt über einen weiteren Strahlteiler dem dritten Detektionsmodul zuführt. Dieser Ausführungsform liegt die Erkenntnis zugrunde, dass die erfindungsgemäßen spektral selektiven Bauelemente, welche die vorstehend genannten Strahlteiler bilden, die Eigenschaft haben, ausgehend von der spektralen Kante einen größeren spektralen Bereich hoher Reflexion als Transmission zu besitzen. Soll nun eine Non-Descanned-Detektionseinheit mit mehr als zwei Detektionsmodulen aufgebaut werden, so ist es von Vorteil, eine Kaskadierung der Detektionsmodule nicht über die Transmission, sondern über die Reflexion vorzunehmen, um die größtmögliche spektrale Flexibilität zu erzielen.

In einer weiteren vorteilhaften Ausführungsform sind die vorstehend genannten Strahlteiler derart ausgebildet, dass die Wellenlängen der spektralen Anteile des Detektionslichtbündels, welche die Strahlteiler den ihnen jeweils zugeordneten Detektionsmodulen durch Transmission zuführen, innerhalb der Strahlteilerkaskade sukzessive abnehmen. So kann bei einer mehrere Detektionsmodule umfassenden Detektionseinheit jedes einzelne Detektionsmodul nur maximal den Teil des Detektionslichtes detektieren, der nicht von den anderen Detektionsmodulen detektiert wird. In dieser Ausführungsform ist deshalb vorgesehen, auf dem Detektionslicht denjenigen spektralen Anteil, der die größten Lichtwellenlängen aufweist, auf das in dem Detektionsstrahlengang erste Detektionsmodul zu lenken, d.h. auf dasjenige Detektionsmodul, das in Transmission dem ersten Strahlteiler nachgeordnet ist. Dementsprechend wird derjenige spektrale Anteil des Detektionslichtes, dessen Lichtwellenlängen die zweitgrößten sind, auf das innerhalb des Detektionsstrahlengangs zweite Detektionsmodul gelenkt, also auf dasjenige Detektionsmodul, das dem zweiten Strahlenteiler in Transmission nachgeordnet ist. Die weiteren spektralen Anteile werden dann in analoger Weise auf die übrigen Detektionsmodule verteilt. Die Strahlteiler sind folglich als Langpass-Strahlteiler ausgebildet.

Im Zusammenwirken mit der zuvor beschriebenen Ausführungsform entsteht somit eine Kaskadierung der Detektionsmodule nicht nur über die Reflexion an den Strahlteilern, sondern auch über die Wellenlängen der spektralen Anteile des Detektionslichtes, die mit den Detektionsmodulen detektiert werden.

Da der Reflexionsgrad der Strahlteiler üblicherweise höher als deren Transmissionsgrad ist, bietet der kaskadenartige Aufbau der Detektionseinheit den Vorteil höherer Lichtausbeute. Denn das Detektionslicht wird auf seinem Weg zu den jeweiligen Detektionsmodulen jeweils nur an genau einem der Strahlteiler transmittiert.

Eine weitere vorteilhafte Ausführung sieht mindestens einen ersten Strahlteiler, der in dem Detektionsstrahlengang dem Bild der Objektivpupille vorgeordnet ist und mindestens einen zweiten Strahlenteiler vor, der in dem Detektionsstrahlengang dem Bild der Objektivpupille nachgeordnet ist. Dabei wird der jeweilige Abstand von dem Pupillenbild entsprechend den vorstehenden Beziehungen (1) oder (2) festgelegt. Auch dies ermöglicht einen besonders kompakten Aufbau des Abtastmikroskops.

Vorzugsweise weisen der erste und der zweite Strahlteiler gleiche Dispersion auf und sind im gleichen Abstand von dem Bild der Objektivpupille angeordnet. Wie schon weiter oben erwähnt, entspricht dabei die Dispersion der Änderung der spektralen Kante pro Strecke auf der Wirkfläche. Auch dies begünstigt einen besonders einfachen und kompakten Aufbau. Dies gilt insbesondere dann, wenn in dem reflektierten als auch dem transmittierten Strahlengang spektral selektive Bauelemente um das jeweilige Pupillenbild angeordnet werden.

In einer weiteren Ausgestaltung sind mindestens zwei Strahlteiler vorgesehen, die dem Bild der Objektivpupille in verschiedenen Abständen vorgeordnet sind und unterschiedliche Dispersionen aufweisen und/oder mindestens zwei Strahlteiler, die dem Bild der Objektivpupille in verschiedenen Abständen nachgeordnet sind und unterschiedliche Dispersionen aufweisen. Dieser Ausgestaltung liegt die Erkenntnis zugrunde, dass der Abstand des jeweiligen spektral selektiven Bauelementes zur Pupille unter anderem von der Dispersion des Bauelementes abhängt. Dies bietet die Möglichkeit, sowohl vor dem Pupillenbild als auch nach dem Pupillenbild mehr als nur ein spektrales selektives Bauelement anzuordnen, wobei diejenigen Bauelemente, die sich auf seiner Seite der zugehörigen Pupille befinden, unterschiedliche Dispersion haben.

In einer weiteren vorteilhaften Ausführung umfasst das mindestens eine spektral selektive Bauelement mindestens einen Kantenfilter, der in mindestens einem der Detektionsmodule, das einen Detektor aufweist, ohne weitere Abbildungsoptik an den Strahlteiler anschließt. Der mindestens eine Kantenfilter ist dem Detektor vorgeordnet und seine Wirkfläche ist im Wesentlichen am Ort eines Bildes der Objektivpupille angeordnet. In dieser Ausführung wird der mindestens eine Kantenfilter mit seiner Wirkfläche vorzugsweise senkrecht zur optischen Achse des Detektionsstrahlengangs angeordnet. Der mindestens eine Kantenfilter kann wiederum mindestens einen Kurzpassfilter, mindestens einen Langpassfilter und/oder mindestens einen Bandpassfilter umfassen. Ist der mindestens eine Kantenfilter aus mehreren Bauelementen gebildet, so befinden sich diese in unmittelbarer Nähe des Pupillenbildes.

Vorzugsweise enthält die Detektionseinheit mindestens eine asphärische Linse, die in einer besonders vorteilhaften Ausführung auch achromatisch ausgebildet ist. Diese Ausgestaltung berücksichtigt den Umstand, dass im Strahlengang der Non-Descanned-Detektionseinheit große Aperturen auftreten. Die Verwendung asphärischer, achromatischer Linsen ermöglicht es, die bei großen Aperturen auftretenden Abbildungsfehler gering zu halten.

Vorzugsweise ist die Wirkfläche des spektral selektiven Bauelementes zusätzlich polarisationssensitiv ausgebildet. Dies kann beispielsweise durch Aufbringen von polarisationssensitiven Bereichen auf die Wirkfläche realisiert werden. Diese polarisationssensitiven Bereiche können beispielsweise als Polarisatoren oder Polarisationsteiler ausgebildet sein. Diese Ausführung ist insbesondere für Anisotropieuntersuchungen vorteilhaft. Sie ermöglicht es auch, das Detektionslicht mit unterschiedlichen Polarisationsrichtungen in verschiedene Detektionsmodule zu lenken.

In einer speziellen Ausgestaltung ist das Objektiv sowohl zum Fokussieren des Beleuchtungslichtbündels auf die Probe als auch zum Empfangen des Detektionslichtbündels vorgesehen. Diese Ausführung sieht also ein für die Beleuchtung und die Detektion gemeinsam genutztes Objektiv vor.

In einer alternativen Ausgestaltung ist das genannte Objektiv nur zum Fokussieren des Beleuchtungslichtbündels auf die Probe vorgesehen. In dem Detektionsstrahlengang befindet sich dann eine Optik, die das Detektionslichtbündel empfängt und weiter in Richtung der Detektionseinheit transportiert. Die Optik ist beispielsweise ein Objektiv oder ein Kondensor und sammelt das aus der Probe stammende Detektionslicht.

Die Erfindung wird im Folgenden anhand spezieller Ausführungsformen unter Bezugnahme auf die Figuren näher erläutert. Darin zeigen:

Fig. 1    eine schematische Darstellung eines spektral selektiven Bauelementes;

Fig. 2    ein erfindungsgemäßes Abtastmikroskop mit zwei spektral selektiven Bauelementen der in Figur 1 gezeigten Art;

Fig. 3    eine schematische Darstellung, welche die durch die Abtastung entstehende Kippbewegung des Detektionslichtbündels veranschaulicht;

Fig. 4    eine schematische Darstellung, welche die Schrägstellung der Wirkfläche des spektral selektiven Bauelementes zeigt;

Fig. 5    ein Diagramm, das den Zusammenhang zwischen den Scanwinkeln und dem Lichteinfallsort auf der Wirkfläche des spektral selektiven Bauelementes für unterschiedliche Schrägstellungen der Wirkfläche zeigt;

Fig. 6    eine weitere Ausführungsform des erfindungsgemäßen Abtastmikroskops mit zwei schräggestellten Filterpaaren;

Fig. 7    den Strahlengang der Pupillenabbildung zu der in Figur 6 gezeigten Ausführungsform;

Fig. 8    eine gegenüber der Ausführungsform nach den Figuren 6 und 7 abgewandelte Ausführungsform, in der die Filterpaare senkrecht zur optischen Achse des Detektionsstrahlengangs angeordnet sind;

Fig. 9    eine weitere Ausführungsform des Abtastmikroskops mit einem weiteren Detektionsmodul;

Fig. 10   den Strahlengang der Pupillenabbildung zu der in Figur 9 gezeigten Ausführungsform;

Fig. 11   eine weitere Ausführungsform des Abtastmikroskops;

Fig. 12   eine weitere Ausführungsform des Abtastmikroskops zur Veranschaulichung einer erfindungsgemäßen Strahlteilerkaskade;

Fig. 13   eine weitere Ausführungsform des Abtastmikroskops;

Fig. 14   eine weitere Ausführungsform des Abtastmikroskops, in der Strahlteiler unterschiedlicher Dispersion eingesetzt werden;

Fig. 15   eine weitere Ausführungsform des Abtastmikroskops, bei dem in den Detektionskanälen zwischen Strahlteiler und dem nächsten spektral selektiven Bauelement keine weitere Abbildungsoptik angeordnet ist;

Fig. 16   eine Abwandlung des spektral selektiven Bauelementes nach Figur 1; und

Fig. 17   eine weitere Ausführungsform des Abtastmikroskops, bei der das Detektionslicht über eine von dem Beleuchtungsobjektiv separate Optik zu den Detektionseinheiten gelangt.

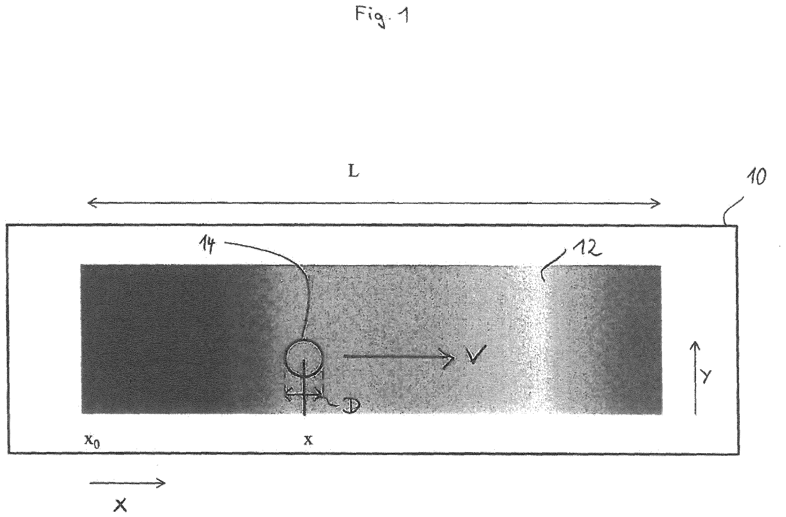

Unter Bezugnahme auf Figur 1 werden im Folgenden zunächst die Eigenschaften eines spektral selektiven Bauelementes 10 erläutert, das erfindungsgemäß in einer Non-Descanned-Detektionseinheit zur spektralen Beeinflussung eines Detektionslichtbündels eingesetzt wird.

In dem Ausführungsbeispiel nach Figur 1 ist das spektral selektive Bauelement 10 ein variabler dichroitischer Kantenfilter, z.B. ein Langpassfilter oder ein Kurzpassfilter. Als Langpassfilter transmittiert der Kantenfilter das Spektrum oberhalb einer vorbestimmten Grenzwellenlänge oder spektralen Kante, während er als Kurzpassfilter das Spektrum unterhalb derselben transmittiert. Es ist jedoch darauf hinzuweisen, dass die nachstehenden Erläuterungen nicht auf einen Filter beschränkt sind, sondern entsprechend auch für den Fall gelten, dass das erfindungsgemäße Bauelement 10 einen spektral selektiven Strahlteiler bildet, der das Spektrum oberhalb der spektralen Kante transmittiert, während er das Spektrum unterhalb der spektralen Kante in definierter Weise reflektiert (oder umgekehrt).

Wie in Figur 1 gezeigt, hat das spektral selektive Bauelement 10 eine Wirkfläche 12, die längs einer Variationsachse V eine spektralwirksame Länge L aufweist. In dem Beispiel nach Figur 1 liegt die Variationsachse V parallel zu einer mit x bezeichneten Längsrichtung und senkrecht zu einer mit y bezeichneten Breitenrichtung.

Das Bauelement 10 hat die Eigenschaft, dass sich seine spektrale Kante mit dem Ort des Einfalls des Detektionslichtbündels längs der Variationsachse V ändert. Die Variationsachse V wird deshalb auch als Dispersionsachse bezeichnet.

Die Änderung der spektralen Kante mit dem Ort des Einfalls des Detektionslichtbündels längs der Variationsachse V kann linear oder nichtlinear, d.h. z.B. quadratisch, exponentiell oder in einer anderen Art, erfolgen. Der durch das Detektionslichtbündel auf der Wirkfläche 12 des Kantenfilters 10 erzeugte Lichtfleck ist in Figur 1 mit 14 bezeichnet. Demgegenüber sind die spektralen Eigenschaften des Kantenfilters 10, insbesondere dessen spektrale Kante, in der zur Variationsachse V senkrechten Breitenrichtung y in dem Ausführungsbeispiel nach Figur 1 weitgehend konstant.

Indem das Bauelement 10 längs der Variationsachse V verschoben wird, ändern sich der Einfallsort des Lichtflecks 14 und damit die Lage der spektralen Kante, d.h. der Grenzwellenlänge, die den Spektralbereich der Transmission von dem Spektralbereich der Reflexion trennt. Bezeichnet man den Wellenlängenbereich, innerhalb dessen die spektrale Kante des Bauelementes 10 (ausgehend von einem mit $x_0$ bezeichneten Referenzwert) geändert werden kann, mit *WR,* so gibt die Größe *ED = WR/L* die Änderung der spektralen Kantenlage pro Strecke auf der Wirkfläche 12 des Bauelementes 10 längs der Variationsachse V an, falls die Änderung der spektralen Kante mit dem Ort des Einfalls des Detektionslichtbündels längs der Variationsachse V linear verläuft.

Bei dem spektral selektiven Bauelement 10 nach Figur 1 tritt nun das Problem auf, dass eine Zunahme des in Figur 1 mit D bezeichneten Durchmessers des Lichtflecks 14 zu einer Verringerung der spektralen Kantensteilheit führt. Als spektrale Kantensteilheit wird beispielsweise ein Spektralbereich definiert, innerhalb dessen die Transmission von 10 % auf 90 % ansteigt.

Messungen an einem exemplarischen Kantenfilter in Abhängigkeit des Durchmessers D des Lichtflecks 14 haben ergeben, dass sich für den untersuchten Aufbau die

Kantensteilheit ST in guter Näherung durch folgende lineare Beziehung beschreiben lässt:

$$ST = D \times \frac{6\,\text{nm}}{\text{mm}} + 7\,\text{nm} \quad (3).$$

Ferner hat das spektral selektive Bauelement 10 nach Figur 1 die Eigenschaft, dass sich seine spektrale Kante in Abhängigkeit des Einfallswinkels ändert, unter dem das Detektionslichtbündel auf die Wirkfläche 12 fällt.

Im Allgemeinen ergibt sich für Strahlteiler, die für eine Schrägstellung gegenüber der optischen Achse von $\varphi$ = 45° (und damit auch für einen Einfallswinkel von 45°) ausgebildet sind, ein näherungsweise linearer Zusammenhang zwischen Einfallswinkel und Verschiebung der Kantenlage (und damit auch zwischen Scanwinkel $\vartheta$ und Verschiebung der Kantenlage), solange der Scanwinkel nicht zu groß ist.

Es wurden für einen Strahlteiler, der für einen Einfallswinkel von 45° ausgebildet wurde, bei einer Wellenlänge von 570 nm exemplarische Messungen in einem Scanwinkelbereich von $\vartheta$ = -10° bis $\vartheta$ = +10° durchgeführt, aus denen sich folgende lineare Beziehung für die Verschiebung ES der Kantenlage in Abhängigkeit des Scanwinkels $\vartheta$ ergibt (der sich wiederum direkt aus dem Einfallswinkel und dem Winkel $\varphi$ berechnen lässt):

$$ES = \frac{1{,}55\,\text{nm}}{\text{Grad}} \times \vartheta \quad (4).$$

Für spektral selektive Bauelemente, die als variable dichroitische Kantenfilter für senkrechten Einfallswinkel ausgebildet sind, ergibt sich auch eine Abhängigkeit der Kantenlage vom Einfallswinkel, die jedoch für kleine Einfallswinkel im Allgemeinen gering ist.

Im Allgemeinen gilt für Interferenzfilter und damit auch für spektral selektive Bauelemente, die unter senkrechtem Einfall eine Wellenlänge der spektralen Kante $\lambda_{50\%}(\psi_0)$ aufweisen, dass die Wellenlänge der spektralen Kante $\lambda_{50\%}(\psi)$, die bei einem Einfallswinkel $\psi$, der vom senkrechten Einfall abweicht, gemäß der folgenden Formel berechnet werden kann (Warren J. Smith: Modern Optical Engineering, Third Edition, McGraw-Hill, 2000, Seite 208):

$$\lambda_{50\%}(\psi) = \lambda_{50\%}(\psi_0) \sqrt{1 - \frac{\sin(\psi)^2}{n^2}} \quad (5).$$

wobei n den wirksamen Brechungsindex und $\lambda_{50\%}$ die spektrale Kante, d.h. die Wellenlänge bei der die Transmission 50% beträgt, bezeichnet. Diese Formel kann in guter Näherung auch zur Berechnung der Wellenlänge der spektralen Kante $\lambda_{50\%}$ verwendet werden, die bei einem spektral selektiven Bauelement auftritt, das für nicht senkrechten Einfallswinkel konzipiert wurde und bei dem der Einfallswinkel $\psi$ von dem Winkel $\psi_0$ abweicht, für den das spektral selektive Bauelement konzipiert wurde.

Aus Beziehung (5) ergibt sich durch Bildung des Differentialquotienten:

$$\left. \frac{\partial \lambda_{50\%}(\psi)}{\partial \psi} \right|_{\psi_0} = \lambda_{50\%}(\psi_0) \frac{-\sin(\psi_0)\cdot\cos(\psi_0)}{n^2 \cdot \sqrt{1 - \frac{\sin(\psi_0)^2}{n^2}}} \quad (6)$$

$$b = \frac{\sin(\psi_0) \cdot \cos(\psi_0)}{n^2 \cdot \sqrt{1 - \frac{\sin(\psi_0)^2}{n^2}}}$$

Mit der Konstante und einer Einfallswinkeländerung $\Delta\psi$, die dem negativen Scanwinkel entspricht, d.h. $\Delta\psi = -\vartheta$, ergibt sich:

$$ES(\lambda_{50\%}(\psi_0), \vartheta) = \lambda_{50\%}(\psi_0) \cdot b \cdot \vartheta \quad (7)$$

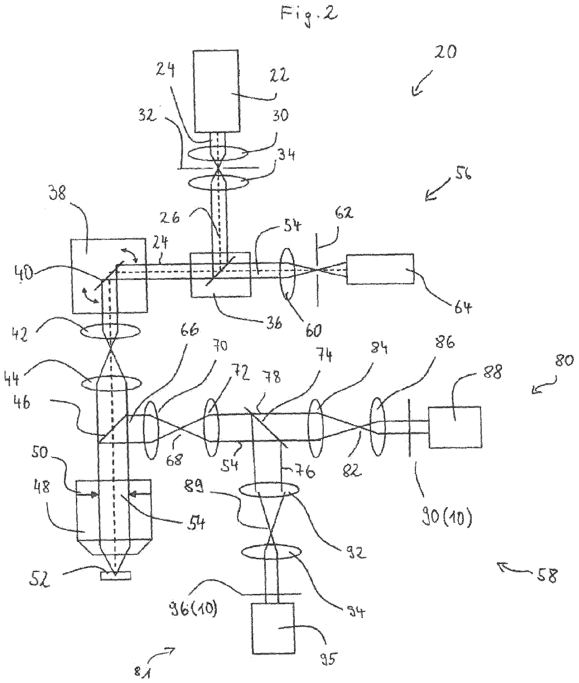

Unter Berücksichtigung des Umstandes, dass bei dem Bauelement 10 nach Figur 1 die Lage der spektralen Kante vom Ort des Einfalls des Detektionslichtbündels auf der Wirkfläche 12 abhängt, sieht die Erfindung in einer speziellen Ausführungsform vor, die Wirkfläche 12 des Bauelementes 10 innerhalb eines Detektionsstrahlengangs eines Abtastmikroskop an einer Stelle anzuordnen, an der das Detektionslichtbündel (abgesehen von einer Kippbewegung) stationär ist, d.h. einen festen Einfallsort auf der Wirkfläche 12 aufweist. Ein solches Verhalten zeigt das Detektionslichtbündel innerhalb des Detektionsstrahlengangs am Ort eines Bildes einer Objektivpupille. Dementsprechend sieht die Erfindung in dieser nachfolgend unter Bezugnahme auf Figur 2 erläuterten Ausführungsform vor, die Wirkfläche 12 des spektral selektiven Bauelementes 10 am Ort des Bildes der Objektivpupille anzuordnen.

Figur 2 zeigt in rein schematischer Darstellung ein erfindungsgemäßes Abtastmikroskop 20, in dem die vorstehend genannte Ausführungsform realisiert ist. Das Abtastmikroskop 20 enthält eine Anregungslichtquelle 22, die ein Beleuchtungslichtbündel 24 längs eines Beleuchtungsstrahlengangs 26 aussendet. Das Beleuchtungslichtbündel 24 wird von einer Linse 30 auf eine Anregungslochblende 32 fokussiert. Nach Durchtritt durch die Anregungslochblende 32 richtet eine weitere Linse 34 das Beleuchtungslichtbündel 24 auf einen Strahlteiler 36, der das Beleuchtungslichtbündel 24 auf eine Abtasteinheit 38 umlenkt, die einen oder mehrere bewegliche Abtastspiegel 40 enthält. Über eine Abtastoptik 42 und eine weitere Linse 44 fällt das mit Hilfe der Abtasteinheit 38 in einer Abtastbewegung umgelenkte Beleuchtungslichtbündel 24 auf einen Strahlteiler 46. Nach Durchtritt durch den Strahlteiler 46 gelangt das Beleuchtungslichtbündel 24 in ein Objektiv 48, das eine Objektivpupille 50 aufweist. Das Objektiv 48 fokussiert schließlich das Beleuchtungslichtbündel 24 auf eine Probe 52.

Mit Hilfe der Abtasteinheit 38 wird das Beleuchtungslichtbündel 24 derart abgelenkt, dass das durch das Objektiv 48 getretene Beleuchtungslichtbündel auf der Probe 52 eine Abtastbewegung ausführt. Durch das Beleuchtungslichtbündel 24 wird so in der Probe 52 Fluoreszenzstrahlung angeregt, die durch das Objektiv 48 in Form eines Detektionslichtbündels 54 zurück in das Abtastmikroskop 20 geleitet wird.

In der Ausführungsform nach Figur 2 wird das Detektionslichtbündel 54 zwei separaten, in Figur 2 allgemein mit 56 bzw. 58 bezeichneten Detektionseinheiten zugeführt. Die Detektionseinheit 56 empfängt das Detektionslichtbündel 54, nachdem dieses auf die Abtasteinheit 38 zurückgeführt worden ist. Die Detektionseinheit 56 bildet also eine Descanned-Einheit. Demgegenüber empfängt die Detektionseinheit 58 das Detektionslichtbündel 54, ohne dass dieses von der Abtasteinheit 38 beeinflusst worden ist. Die Detektionseinheit 58 stellt deshalb eine Non-Descanned-Einheit dar.

Die Descanned-Detektionseinheit 56 enthält eine Linse 60, die das Detektionslichtbündel 54, nachdem dieses durch die Abtasteinheit 38 umgelenkt und durch den Strahlteiler 36 geleitet worden ist, auf eine Detektionslochblende 62 fokussiert. Der Detektionslochblende 62 ist ein Detektor 64 nachgeordnet, der das Beleuchtungslichtbündel 54 empfängt. An dieser Stelle ist darauf hinzuweisen, dass der Strahlteiler 46 beispielsweise aus dem Strahlengang ausschwenkbar oder für die Fluoreszenzstrahlung teiltransmittiv ist.

Die Non-Descanned-Detektionseinheit 58 befindet sich in einem durch den Strahlteiler 46 von dem Beleuchtungsstrahlengang 26 abgezweigten Detektionsstrahlengang 66. Die Non-Descanned-Detektionseinheit 58 enthält beiderseits einer Zwischenbildebene 68, in der ein Zwischenbild der Probe 52 erzeugt wird, jeweils eine Linse 70 bzw. 72. Der Linse 72 ist in dem Detektionsstrahlengang 66 ein Strahlteiler 74 nachgeordnet. Der Strahlteiler 74 spaltet das Detektionslichtbündel 54 in zwei Teilbündel 76 und 78 auf, die zwei separaten, in Figur 2 allgemein mit 80 und 81 bezeichneten Detektionsmodulen zugeführt werden.

Das Detektionsmodul 80 weist beiderseits einer Zwischenbildebene 82, in der ein Zwischenbild der Probe 52 erzeugt wird, jeweils eine Linse 84 bzw. eine Linse 86 auf. Die Linse 86 richtet das Detektionslichtbündel 54 auf einen Detektor 88, dem ein Detektionsfilter 90 vorgeordnet ist.

Entsprechend weist das Detektionsmodul 81 beiderseits einer Zwischenbildebene 89, in der ebenfalls ein Zwischenbild der Probe 52 erzeugt wird, jeweils eine Linse 92 bzw. eine Linse 94 auf. Die Linse 94 richtet das Detektionslichtbündel 54 auf einen Detektor 95. Dem Detektor 95 ist ein Detektionsfilter 96 vorgeordnet.

Es ist darauf hinzuweisen, dass in der Anordnung nach Figur 2 die Strahlteiler 36, 46 und 74 jeweils dichroitisch ausgebildet sind und das auf sie fallende Licht in Abhängigkeit der Wellenlänge durchlassen bzw. reflektieren. So hat der Strahlteiler 36 die Eigenschaft, Licht im Wellenlängenbereich des Beleuchtungslichtbündels 24 zu reflektieren und Licht im Wellenlängenbereich des Detektionslichtbündels 54 durchzulassen. Entsprechend reflektiert der Strahlteiler 46 Licht im Wellenlängenbereich des Detektionslichtbündels 54, während er Licht im Wellenlängenbereich des Beleuchtungslichtbündels 24 durchlässt. Der Strahlteiler 74 wiederum lässt einen Teil des Detektionslichtbündels 54 durch, während er den übrigen Teil reflektiert.

Ferner ist darauf hinzuweisen, dass in der Darstellung nach Figur 2 das Beleuchtungslichtbündel 24 und das Detektionslichtbündel 54 einander teilweise überlagert sind. So bildet etwa der Strahlengang zwischen dem Strahlteiler 46 und der Probe 52 einen gemeinsamen Strahlengang für beide Lichtbündel 24 und 54.

In der speziellen Ausführungsform nach Figur 2 bilden die Detektionsfilter 90 und 96 jeweils ein spektral selektives Bauelement der in Figur 1 gezeigten Art. Dementsprechend ist den Detektionsfilter 90 und 96 in Figur 2 jeweils das Bezugszeichen 10, welches in Figur 1 das spektral selektive Bauelement bezeichnet, in Klammern nachgestellt.

In der speziellen Ausführungsform nach Figur 2 sind die Detektionsfilter 90 und 96 innerhalb des Detektionsstrahlengangs 66 derart angeordnet, dass sie sich jeweils am Ort eines Bildes der Objektivpupille 50 befinden. Diese Anordnung der Detektionsfilter 90 und 96 hat den Vorteil, dass der Lichteinfallsort auf der Wirkfläche 12 des Detektionsfilters 90 bzw. 96 konstant bleibt. Demzufolge tritt keine vom Ort des Lichteinfalls abhängige Kantenlagenverschiebung auf.

Insbesondere für den Fall, dass die durch die Abtasteinheit 38 erzeugte Abtastbewegung des Beleuchtungslichtbündels 24 und damit die entsprechende Kippbewegung des Detektionslichtbündels 54 am Ort des Pupillenbildes vergleichsweise gering sind, ergibt sich auch nur eine geringe winkelabhängige Verschiebung ES der spektralen Kante. Somit stellt die Ausführungsform nach Figur 2 für nicht zu große Scanwinkel eine vorteilhafte Lösung dar.

Unter gewissen Umständen kann es jedoch problematisch sein, das spektral selektive Bauelement 10 nach Figur 1 am Ort des Bildes der Objektivpupille 50 anzuordnen. Dies gilt insbesondere für den Fall, dass das spektral selektive Bauelement 10 für einen größeren Einfallswinkel, wie z.B. 35° oder 45° ausgebildet wurde. Für spektral selektive Strahlteiler ist das oftmals der Fall. Dies soll im Folgenden wiederum anhand eines konkreten numerischen Beispiels veranschaulicht werden.

Unter der beispielhaften Annahme, dass das Objektiv 48 nach Figur 2 eine Vergrößerung von 20 und eine numerische Apertur von 1,00 aufweist, ergibt sich für eine Tubuslinsenbrennweite von 200 mm ein Objektivpupillendurchmesser von 20 mm. Für ein Bildfeld mit einer Kantenlänge von 0,775 mm resultieren daraus Scanwinkel von bis zu ± 2,2° in der Objektivpupille 50 (bezogen auf die optische Achse). Im Detektionsstrahlengang 66 hat dann das Detektionslichtbündel 54 bei einer Abbildung mit dem Abbildungsmaßstab 1 an einem Ort, an dem sich das Bild der Objektivpupille 50 befindet, wiederum einen Durchmesser von 20 mm und einen maximalen Scanwinkel von ± 2,2°.

Setzt man den vorstehend angegebenen Scanwinkel in die Beziehung (4) ein, so ergibt sich eine winkelabhängige Kantenlagenverschiebung von ± 3,41 nm, was einen durchaus tolerierbaren Wert darstellt. Setzt man jedoch den Durchmesser von 20 mm in die Beziehung (3) ein, so ergibt sich für die Kantensteilheit ST ein Wert von 127 nm, der für eine Reihe von Anwendungen einen inakzeptablen großen Wert darstellt.

Der Durchmesser des Detektionslichtbündels 54 lässt sich durch eine geeignete Abbildung, z.B. eine 10-fache Verkleinerung der Objektivpupille 50, durchaus verringern, was unter Berücksichtigung der Beziehung (3) zu einer tolerierbaren Kantensteilheit ST von 19 nm führt. Jedoch geht diese Verringerung des Bündeldurchmessers um den Faktor 10 mit einer Vergrößerung des maximalen Scanwinkels ebenfalls um den Faktor 10 einher, d.h. der maximale Scanwinkel vergrößert sich auf einen Wert von ± 22°. Unter Berücksichtigung der Beziehung (4) ergibt sich hieraus für das gewählte numerische Beispiel eine nicht akzeptable, winkelabhängige Kantenlagenverschiebung ES von ± 34,1 nm, d.h. eine Verschiebung der Kantenlage von mehr als 68 nm zwischen den seitlichen Rändern des Bildfeldes.

Zur Lösung dieses Problems könnte in Erwägung gezogen werden, das spektral selektive Bauelement 10 nicht am Ort des Bildes der Objektivpupille 50, sondern am Ort des Zwischenbildes der Probe 52 anzuordnen (in Figur 2 mit 68, 82 und 89 bezeichnet). Jedoch ist zu bedenken, dass auch bei dieser Lösung eine Abbildung gewählt werden muss, welche die Probe 52 auf einen kleinen Bereich des spektral selektiven Bauelementes 10 abbildet, um für alle Probenpunkte eine ähnliche Kantenlage auf dem Bauelement 10 zu erhalten. Eine solche Abbildung führt jedoch zu einer starken Aufweitung des Detektionslichtbündels 54, d.h. zu einem relativ großen Strahlkegel, auf dem spektral selektiven Bauelement 10 und damit wiederum zu stark unterschiedlichen Kantenlagen für die einzelnen Strahlen innerhalb des Strahlkegels. In der Summe ergibt sich dann durch Mittelung über die Filterfunktionen der einzelnen Strahlen des Strahlkegels wiederum eine geringe Kantensteilheit ST.

Um die vorstehenden Probleme zu vermeiden, sieht die Erfindung in einer zur Anordnung nach Figur 2 alternativen Ausführungsform vor, das spektral selektive Bauelement 10 im Detektionsstrahlengang an einer vom Bild der Objektivpupille 50 beabstandeten Stelle anzuordnen, an der die Kantenlagenverschiebung aufgrund des variierenden Einfallswinkels dadurch kompensiert wird, dass das Detektionsstrahlenbündel für jeden Einfallswinkel auf einen anderen Ort des spektral selektiven Bauelementes 10 längs der Variationsachse V (d.h. in Richtung x) fällt. Da sich die Lage der spektralen Kante längs der Variationsachse V ändert, kann so die winkelabhängige Kantenlagenverschiebung weitgehend kompensiert werden, sofern die Änderung der Lage der spektralen Kante längs der Variationsachse V geeignet gewählt ist.

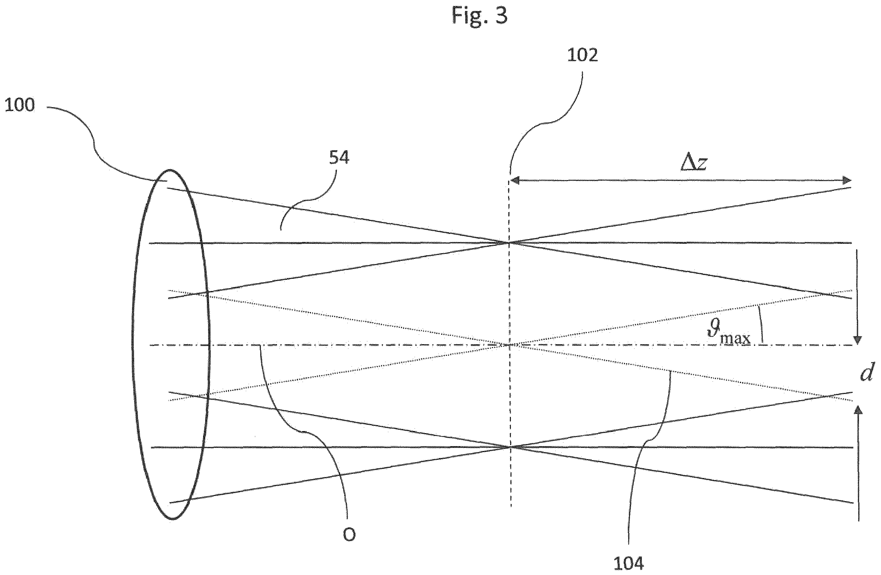

Im Folgenden wird unter Bezugnahme auf die Figuren 3, 4 und 5 erläutert, wie der Abstand der Wirkfläche 12 des spektral selektiven Bauelementes 10 zum Ort des Bildes der Objektivpupille 50 derart vorbestimmt wird, dass die winkelabhängige Kantenlagenverschiebung durch eine gegenläufige Kantenlagenverschiebung kompensiert wird, die sich daraus ergibt, dass die Kippbewegung des Detektionslichtbündels 54 zu einer Variation des Lichteinfallsortes längs der Variationsachse V auf der Wirkfläche 12 führt.

In Figur 3 ist die vorstehend genannte Kippbewegung des Detektionslichtbündels 54 innerhalb des Detektionsstrahlengangs 66 veranschaulicht. Dabei bezeichnet in Figur 3 das Bezugszeichen 100 eine im Detektionsstrahlengang 66 angeordnete Linse, die einer Ebene 102 vorgeordnet ist, in der sich das Bild der Objektivpupille 50 befindet. Ferner bezeichnet $\Delta z$ den längs der optischen Achse O des Detektionsstrahlengangs 66 bemessenen Abstand von der Ebene 102.

Wie Figur 3 zeigt, führt das Detektionslichtbündel 54 eine der Abtastbewegung des Beleuchtungslichtbündels 24 entsprechende Kippbewegung aus, die dazu führt, dass sich das Detektionslichtbündel 54 außerhalb der Ebene 102 des Pupillenbildes räumlich verlagert. Demgegenüber ist das Detektionslichtbündel 54 in der Ebene 102 stationär. Der maximale Scanwinkel, der diese Kippbewegung des Detektionslichtbündels 54 charakterisiert, ist in Figur 3 mit $\vartheta_{max}$ bezeichnet. Dabei gibt der Scanwinkel $\vartheta_{max}$ einen Winkel an, den ein Zentralstrahl 104 des Detektionslichtbündels 54 mit der optischen Achse O einschließt. Der Zentralstrahl 104 bildet die zentrale Bündelachse des Detektionslichtbündels 54. Die dem maximalen Scanwinkel $\vartheta_{max}$ entsprechende räumliche Verlagerung des Detektionslichtbündels 54 im Abstand $\Delta z$ ist in Figur 3 mit d bezeichnet.

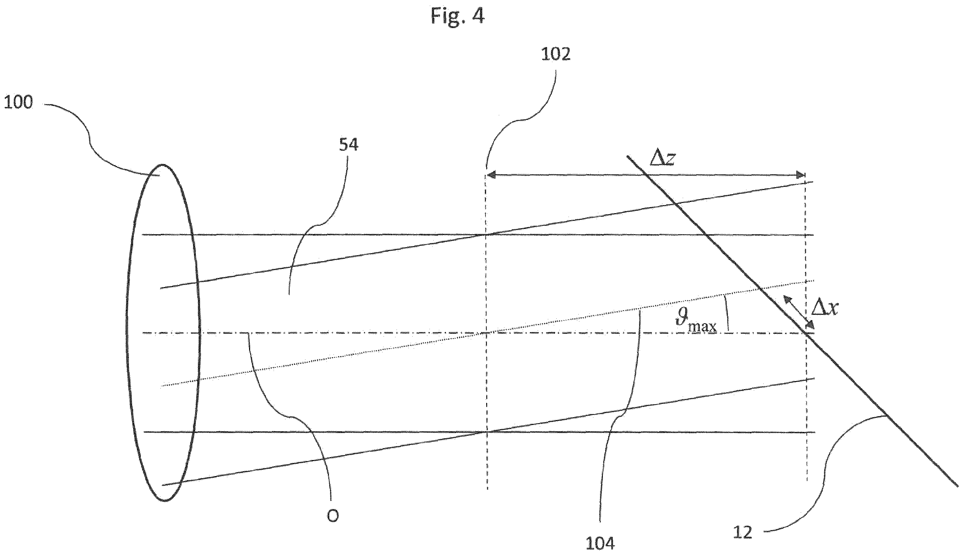

In der Darstellung nach Figur 4 ist rein schematisch die erfindungsgemäße Anordnung der Wirkfläche 12 des spektral selektiven Bauelementes 10 gezeigt. Dabei ist zu beachten, dass in Figur 4 aus Gründen der Übersichtlichkeit nur die halbe Kippbewegung des Detektionslichtbündels 54 dargestellt ist.

Um die Kompensation der vom Scanwinkel abhängigen Kantenlagenverschiebung durch eine gegenläufige, vom Lichteinfallsort auf der Wirkfläche 12 abhängige Kantenlagenverschiebung zu ermöglichen, ist die Wirkfläche 12 in dem Detektionsstrahlengang 66 derart angeordnet, dass sie mit der optischen Achse O keinen Winkel von 90°, sondern einen kleineren Winkel $\varphi$ einschließt. So würde die Anordnung der Wirkfläche 12 unter einem Winkel von 90° im Abstand $\Delta z$ von der Ebene 102 dazu führen, dass die durch die Variation des Scanwinkels verursachte Kantenlagenverschiebung zu beiden Seiten der optischen Achse O $(-\vartheta, +\vartheta)$ gleiches Vorzeichen hat, während die durch die Variation des Lichteinfallsortes auf der Wirkfläche 12 verursachte Kantenlagenverschiebung zu beiden Seiten der optischen Achse O verschiedene Vorzeichen aufweist. Die gewünschte Kompensation der winkelabhängigen Kantenlagenverschiebung durch die einfallsortabhängige Kantenlagenverschiebung ist somit bei einer Anordnung der Wirkfläche 12 senkrecht zu optischen Achse O in dem gesamten Abtastbereich nicht möglich. Demgegenüber wird durch die schräge Anordnung der Wirkfläche 12 unter dem Winkel $\varphi$, der kleiner als 90° ist, eine Kantenlagenverschiebung erzielt, die sich monoton mit dem Winkel ändert, unter dem das Detektionslichtbündel 54 auf die Wirkfläche 12 fällt. Die gewünschte Kompensation der vom Scanwinkel abhängigen Kantenlagenverschiebung durch eine gegenläufige, vom Lichteinfallsort auf der Wirkfläche 12 abhängige Kantenlagenverschiebung wird erreicht, wenn folgende Bedingung erfüllt ist:

$$\Delta x \, \frac{\partial \lambda_{50\%}}{\partial x} = -\Delta \Psi \frac{\partial \lambda_{50\%}}{\partial \Psi} \quad (8)$$

Worin $\frac{\partial \lambda_{50\%}}{\partial x} = ED$ die Änderung der spektralen Kante pro Strecke auf der Wirkfläche bezeichnet. ED wird auch als Dispersion des variablen Filters bzw. des variablen Strahlteilers bezeichnet.

Aus den Darstellungen nach Figur 3 und Figur 4 folgt:

$$\Delta x = \Delta z \frac{\sin \vartheta}{\sin(\vartheta + \varphi)} \quad (9)$$

Eine lineare Fit-Funktion zu Beziehung (9), die z.B. durch Taylor-Entwicklung ermittelt werden kann, lautet:

$$\Delta x = \Delta z \cdot k \cdot \vartheta, \quad (10)$$

wobei k eine Konstante bezeichnet.

Aus der Beziehung (8) und der Beziehung (9) lässt sich der Abstand $\Delta z$ der Wirkfläche 12 des spektral selektiven Bauelementes 10 von der Ebene 102, d.h. dem Ort des Bildes der Objektivpupille 50 nach der weiter oben angegebenen Beziehung (2) berechnen.

Alternativ lässt sich für ein gegebenes $\Delta z$ die benötigte Dispersion $ED = \dfrac{\partial \lambda_{50\%}}{\partial x}$ berechnen. Aus der Beziehung (7), der Beziehung (8) und der Beziehung (10) ergibt sich:

$$\frac{\partial \lambda_{50\%}}{\partial x} = -\frac{\lambda_{50\%} \cdot b}{\Delta z \cdot k} \quad (11)$$

Eine Lösung der Beziehung (11) stellt folgende Beziehung dar:

$$\lambda_{50\%}(\mathrm{x}, \Psi_0) = \lambda_0 \exp\left(\frac{-b}{\Delta z \cdot k} \cdot x\right) \quad (12)$$

Worin $\lambda_0$ die Startwellenlänge, d.h. die Wellenlänge am Nullpunkt der x-Koordinate, bezeichnet.

Die spektrale Kante des spektral selektiven Bauelements variiert für die hier getroffenen Näherungen längs der Variationsachse exponentiell mit dem Ort des Einfalls des Detektionslichtbündels. Die im Aufbau umgesetzte Dispersion hängt von dem Verhalten des Filters ab, so dass auch ein anderer Zusammenhang als der exponentielle Verlauf die beste Lösung darstellen kann.

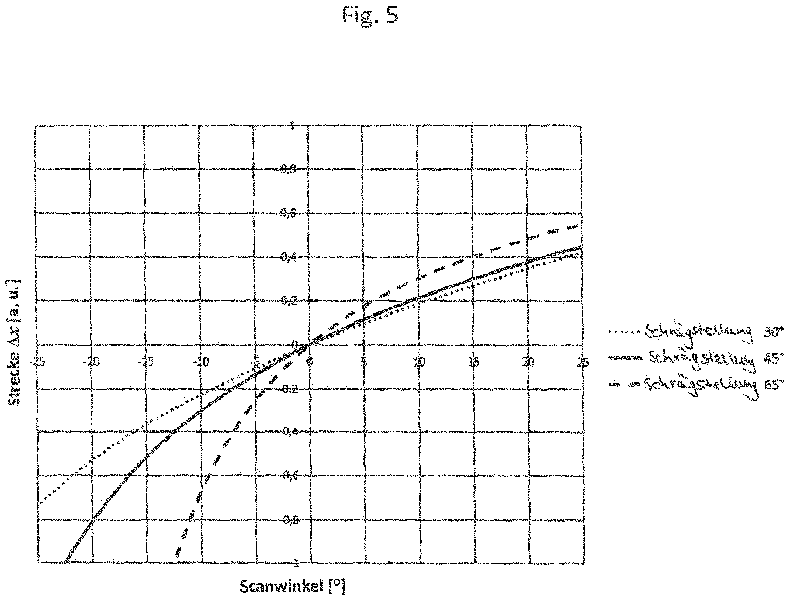

Figur 5 zeigt den Zusammenhang zwischen dem Scanwinkel, unter dem das Detektionslichtbündel 54 (genauer dessen Zentralstrahl 104, vgl. Figur 4) auf die Wirkfläche 12 fällt, und der Strecke $\Delta x$ auf der Wirkfläche 12. Dieser Zusammenhang ist in Figur 5 für drei unterschiedliche Schrägstellungen der Wirkfläche 12 angegebenen, wobei darauf hinzuweisen ist, dass die drei Winkelangaben in Figur 5 (im Unterschied zur Definition des Winkels $\varphi$ in Figur 4) jeweils den Winkel der Flächennormalen der Wirkfläche 12 relativ zur optischen Achse O des Detektionsstrahlengangs 66 bezeichnen.

Wie der Darstellung nach Figur 5 zu entnehmen ist, lässt sich der Zusammenhang zwischen dem Scanwinkel und der Strecke $\Delta x$ auf der Wirkfläche 12 umso besser mit Hilfe einer linearen Beziehung annähern, je weniger die Schrägstellung der Wirkfläche 12 von einer rechtwinkligen Anordnung relativ zu optischen Achse O abweicht.

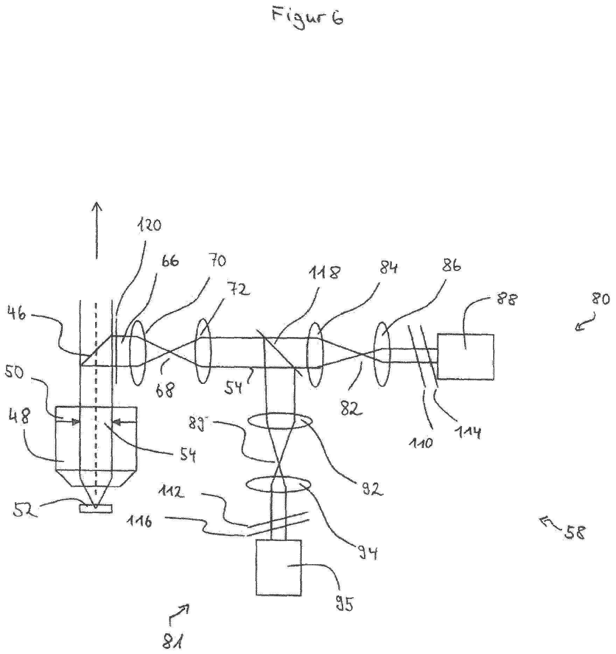

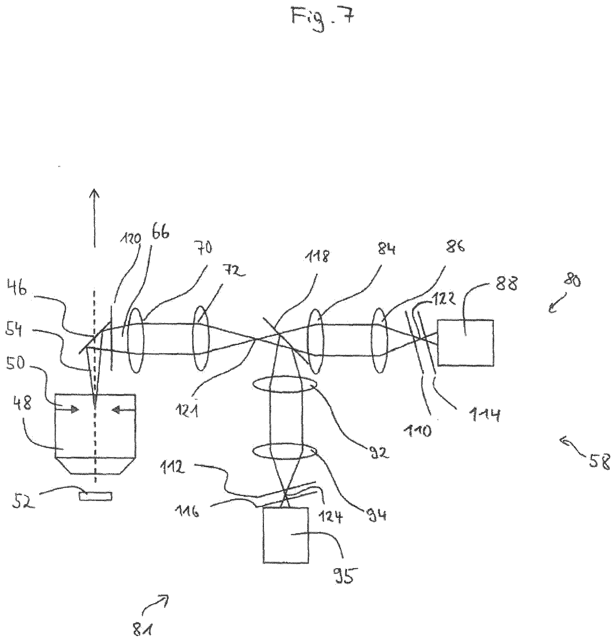

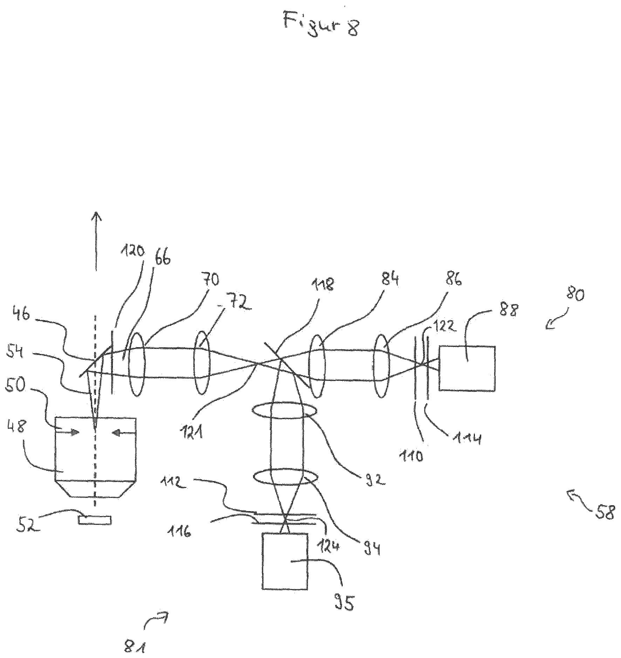

In den Figuren 6 und 7 ist eine abgewandelte Ausführungsform des in Figur 2 dargestellten Abtastmikroskops 20 gezeigt, bei der die vorstehend erläuterte Kompensation der winkelabhängigen Kantenlagenverschiebung durch eine gegenläufige Kantenlagenverschiebung, die durch eine Variation des Lichteinfallsortes auf dem spektral selektiven Bauelement 10 verursacht wird, zur Anwendung kommt. Dabei sind in den Figuren 6 und 7 diejenigen Komponenten, die den in der Ausführungsform nach Figur 2 verwendeten Komponenten entsprechen, mit den schon in Figur 2 verwendeten Bezugszeichen versehen. In Figur 6 sind überdies lediglich diejenigen Komponenten dargestellt, die Teil der Non-Descanned-Detektionseinheit 58 sind oder mit dieser unmittelbar zusammenwirken. Entsprechendes gilt für alle weiteren Ausführungsbeispiele, die weiter unten unter Bezugnahme auf die Figuren 8 bis 17 beschrieben werden.

Im Unterschied zur Ausführungsform nach Figur 2 enthält die in Figur 6 dargestellte Ausführungsform vor den beiden Detektoren 88 und 95 jeweils ein Filterpaar, das aus einem Langpassfilter 110 bzw. 112 und einem Kurzpassfilter 114 bzw. 116 gebildet ist. Die beiden Filterpaare bilden somit jeweils ein Bandpassfilter mit zwei spektralen Kanten, die sich unabhängig voneinander variabel einstellen lassen. Jedes der Filter 110, 112, 114 und 116 ist entsprechend der Darstellung nach Figur 4 schräg gestellt, um die gewünschte monotone Kantenlagenverschiebung in Abhängigkeit des Einfallswinkels zu erzielen.

Die Anordnung nach Figur 6 enthält ferner einen Strahlteiler 118, der wie die Filter 110, 112, 114 und 116 ein spektral selektives Bauelement der in Figur 1 gezeigten Art darstellt. Der Strahlteiler 118 ist mit seiner Wirkfläche unter einem Winkel von 45° zur optischen Achse des Detektionsstrahlengangs 66 angeordnet.

Ferner weist die Anordnung nach Figur 6 zusätzlich ein Sperrfilter 120 auf, das in dem Detektionsstrahlengang 66 der Linse 70 vorgeordnet ist. Der Sperrfilter 120 dient dazu, das an der Probe 52 reflektierte Anregungslicht zu blockieren, dessen Intensität um ein Vielfaches größer als die Intensität des detektierten Fluoreszenzlichtes ist.

Figur 7 zeigt den Strahlengang der Pupillenabbildung, die zu der Anordnung nach Figur 6 gehört. In der Darstellung nach Figur 7 lassen sich innerhalb des Detektionsstrahlengangs 66 diejenigen Orte erkennen, in denen sich jeweils ein Bild der Objektivpupille 50 befindet. Diese sind in Figur 7 mit 121, 122 und 124 bezeichnet. Der Strahlteiler 118 ist dem Ort 121 des Pupillenbildes in einem Abstand nachgeordnet, der entsprechend der oben angegebenen Bedingung (1) oder (2) vorbestimmt ist. Entsprechendes gilt für das aus den Filtern 110 und 114 gebildete Filterpaar sowie das aus den Filtern 112 und 116 gebildete Filterpaar, wobei die Filter 110, 112 jeweils dem Ort des Pupillenbildes vorgeordnet und die Filter 114, 116 jeweils dem Ort des Pupillenbildes nachgeordnet sind. Die Abstände, die die Filter 110 und 114 vom Ort des Pupillenbildes aufweisen, sind dabei betragsmäßig gleich. Gleiches gilt für das Filterpaar 112, 116.

Figur 8 zeigt eine der Figur 7 entsprechende Darstellung der Pupillenabbildung für eine abgewandelte Ausführungsform, in der die Filter 110, 112, 114 und 116 nicht schräg gestellt, sondern rechtwinklig zur optischen Achse des Detektionsstrahlengangs 66 ausgerichtet sind. Dementsprechend sind die Filter 110, 112, 114 und 116 in dieser Ausführungsform entgegen der rein schematischen Darstellung nach Figur 8 praktisch am jeweiligen Ort des Pupillenbildes angeordnet.

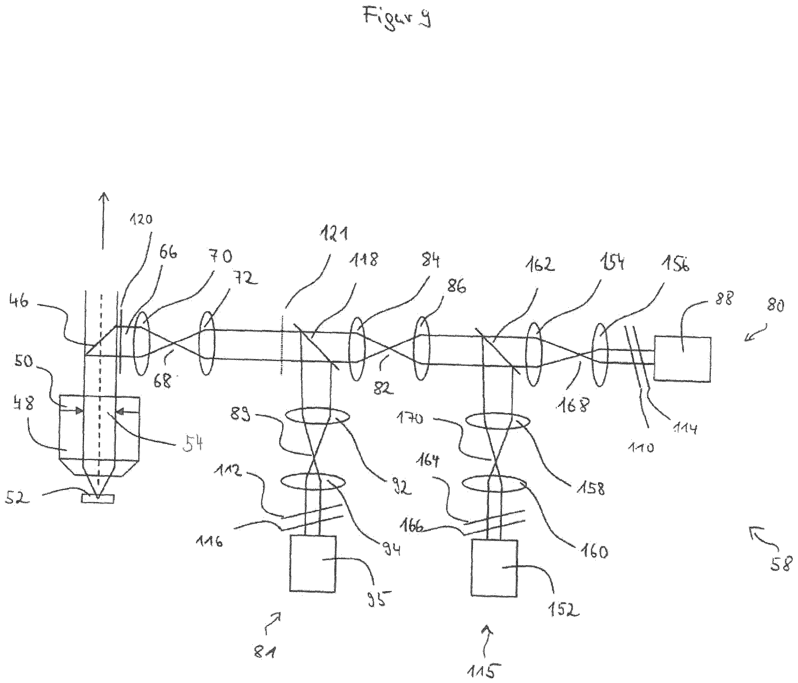

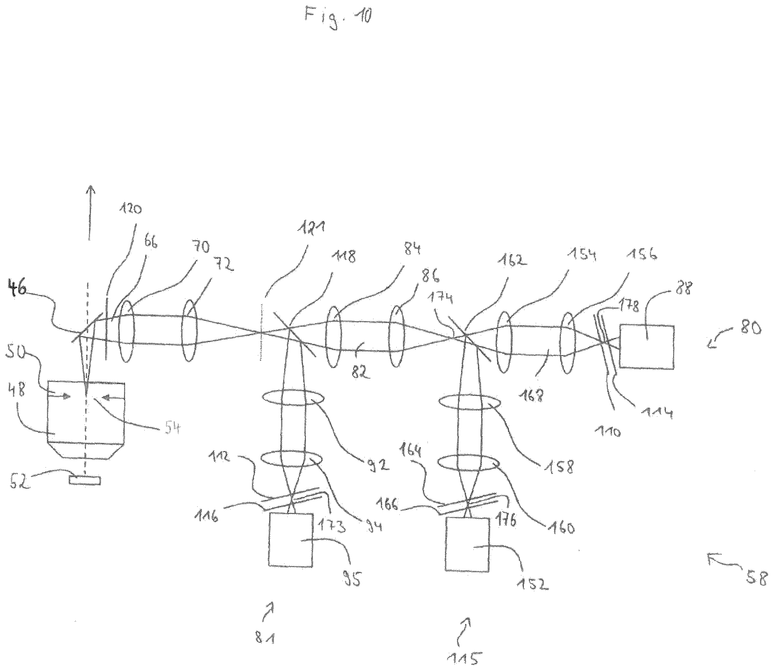

Die Figuren 9 und 10 zeigen eine weitere Ausführungsform, die gegenüber der Ausführungsform nach den Figuren 6 und 7 ein weiteres Detektionsmodul 115 mit einem zusätzlichen Detektor 152 enthält. Dementsprechend sind in dem Detektionsstrahlengang 66 weitere Linsen 154, 156, 158 und 160 vorgesehen. Außerdem enthält der Detektionsstrahlengang 66 einen weiteren Strahlteiler 162 sowie einen Langpassfilter 164 und einen Kurzpassfilter 166, die dem Detektor 152 vorgeordnet sind und in Kombination einen Bandpassfilter bilden. Die zusätzlichen Zwischenbildebenen, in denen jeweils ein Zwischenbild der Probe 52 erzeugt wird, sind in Figur 9 mit 168 und 170 bezeichnet. Der Darstellung der Pupillenabbildung nach Figur 10 sind ferner zusätzliche Orte 173, 174, 176 und 178 eines Pupillenbildes zu entnehmen.

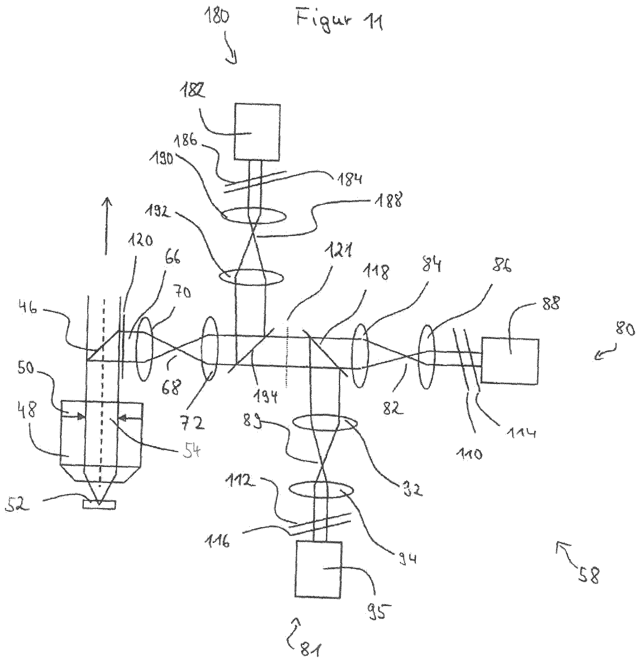

Figur 11 zeigt eine gegenüber der in den Figuren 9 und 10 dargestellten Anordnung modifizierte Ausführungsform, in der das Detektionsmodul 115 durch ein Detektionsmodul 180 ersetzt ist. Das Detektionsmodul 180 enthält einen Detektor 182, dem ein Langpassfilter 184 und ein Kurzpassfilter 186 vorgeordnet sind, die in Kombination einen Bandpassfilter bilden. Ferner enthält das Detektionsmodul 180 beiderseits einer Zwischenbildebene 188, in der ein Bild der Probe 52 erzeugt wird, zwei weitere Linsen 190 bzw. 192.

Zusätzlich zu dem Strahlteiler 118 enthält der Detektionsstrahlengang 66 in dieser Ausführungsform einen weiteren Strahlteiler 194 der in Figur 1 dargestellten Art. Die beiden Strahlteiler 118 und 194 sind in gleichem Abstand, der nach der Beziehung (1) oder (2) festgelegt ist, vor bzw. hinter dem Ort 121 der Pupillenabbildung angeordnet. Dies ermöglicht einen besonders kompakten Aufbau, da verglichen mit der Ausführungsform nach den Figuren 9 und 10 die Zahl der optischen Elemente reduziert werden kann.

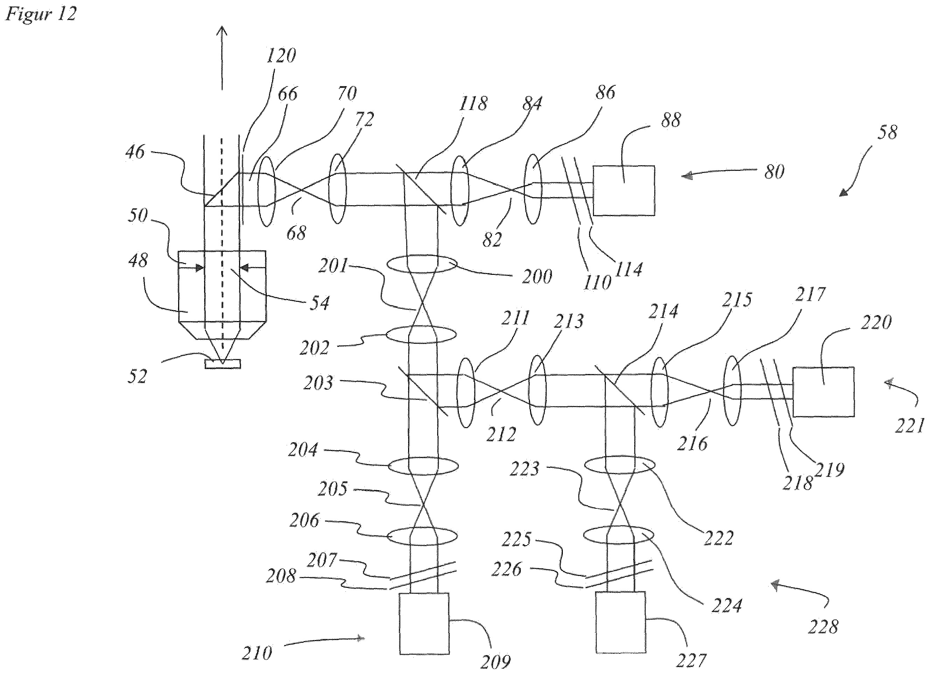

Figur 12 zeigt eine weitere Ausführungsform des Abtastmikroskops 20, die Bezug nimmt auf die Ausgestaltung nach Figur 11.

Die Ausführungsform nach Figur 12 enthält die Non-Descanned-Detektionseinheit 58, die insgesamt vier Detektionsmodule, nämlich das Detektionsmodul 80 sowie drei weitere Detektionsmodule 210, 221 und 228 umfasst. Den Detektionsmodulen 80, 210, 221 und 228 wird in nachfolgend beschriebener Weise das Detektionslichtbündel 54 spektral separiert mittels einer Strahlteilerkaskade zugeführt. Diese Strahlteilerkaskade ist aus dem Strahlteiler 118 sowie weiteren Strahlteilern 203 und 214 gebildet. Dabei sind die spektral selektiven Strahlteiler 118, 203 und 214 im Detektionsstrahlengang 66 mit ihren Wirkflächen jeweils unter einem Winkel von 45° zur optischen Achse des Detektionstrahlengangs 66 angeordnet. Außerdem sind die Strahlteiler 118, 203 und 214 jeweils dem Ort eines Bildes der Objektivpupille 50 in einem Abstand nachgeordnet, der entsprechend den Bedingungen (1) oder (2) vorbestimmt ist.

Die Ausführungsform nach Figur 12 berücksichtigt den Umstand, dass die Strahlteiler 118, 203 und 214 jeweils einen größeren spektralen Bereichdes Detektionslichtbündels 54 in Bezug auf die spektrale Kante reflektieren als transmittieren. Die Ausführungsform nach Figur 12 sieht deshalb eine Kaskadierung der Detektionsmodule 80, 210, 221 und 228 über die Reflexion an den Strahlteilern 118, 203 und 214 vor. Diese Ausführungsform berücksichtigt ferner den Umstand, dass jedem der Detektionsmodule 80, 210, 221 und 228 nur maximal derjenige spektrale Anteil des Detektionslichtbündels 54 zugeführt werden kann, der nicht von den jeweils anderen Detektionsmodulen detektiert wird. Dementsprechend sieht die Ausführungsform nach Figur 12 nicht nur eine Kaskadierung über die Strahlteilerreflexion, sondern auch über die Wellenlängen der spektralen Anteile vor, die mit den Detektionsmodulen 80, 210, 221 und 228 detektiert werden. Die zuletzt genannte Kaskadierung erfolgt beginnend mit der größten Wellenlänge hin zu kürzeren Wellenlängen.

Im Einzelnen transmittiert der Strahlteiler 118 den spektralen Anteil des Detektionslichtbündels 54, der innerhalb des Detektionslichts die größten Wellenlängen aufweist, in das Detektionsmodul 80. Dieser langwellige spektrale Anteil gelangt so nach Durchtritt durch die Linsen 84, 86 und das schräg gestellte Filterpaar, das durch den Langpassfilter 110 und den Kurzpassfilter 114 gebildet ist, zu dem Detektor 88. Der verbleibende spektrale Anteil des Detektionslichts wird an dem Strahlenteiler 118 durch Linsen 201, 202 auf den Strahlteiler 203 reflektiert. Der Strahlteiler 203 transmittiert denjenigen spektralen Anteil, der innerhalb des ihm zugeführten Detektionslichts die größten Wellenlängen aufweist, in das Detektionsmodul 210. Nach Durchtritt durch Linsen 204, 206 und ein schräg gestelltes Filterpaar, das aus einem Langpassfilter 207 und einem Kurzpassfilter 208 gebildet ist, gelangt der durch den Strahlteiler 203 transmittierte spektrale Anteil des Detektionslichts zu einem Detektor 209. Der verbleibende spektrale Anteil des Detektionslichts wird von dem Strahlteiler 203 durch Reflexion über Linsen 211, 213 dem Strahlteiler 214 zugeführt.

Der Strahlteiler 214 transmittiert denjenigen spektralen Anteil, der innerhalb des ihm zugeführten Detektionslichts die größten Wellenlängen aufweist, in das Detektionsmodul 221. Nach Durchtritt durch Linsen 215, 217 und ein schräg gestelltes Filterpaar, das aus einem Langpassfilter 218 und einem Kurzpassfilter 219 gebildet ist, gelangt dieser transmittierte spektrale Anteil zu einem Detektor 220. Den verbleibenden spektralen Anteil des ihm zugeführten Detektionslichts reflektiert der Strahlteiler 214, so dass dieser spektrale Anteil nach Durchtritt durch Linsen 222, 224 und ein schräg gestelltes Filterpaar, das aus einem Langpassfilter 225 und 226 gebildet ist, zu einem Detektor 227 gelangt.

In der Anordnung nach Figur 12 bezeichnen die Bezugzeichen 201, 205, 212, 216 und 223 Orte, an denen ein Zwischenbild der Probe 52 erzeugt wird.

Die Anordnung nach Figur 12 sieht also vor, dass das Detektionslichtbündel 54 auf seinem Weg zu den Detektoren 88, 209, 220 und 227 jeweils nur genau eine Transmission an einem der Strahlteiler 118, 203 und 214 erfährt. Im Hinblick auf die Lichtausbeute ist dies von Vorteil, da die Reflexionsgrade der Strahlteiler 118, 203 und 214 höher als deren Transmissionsgrade sind.

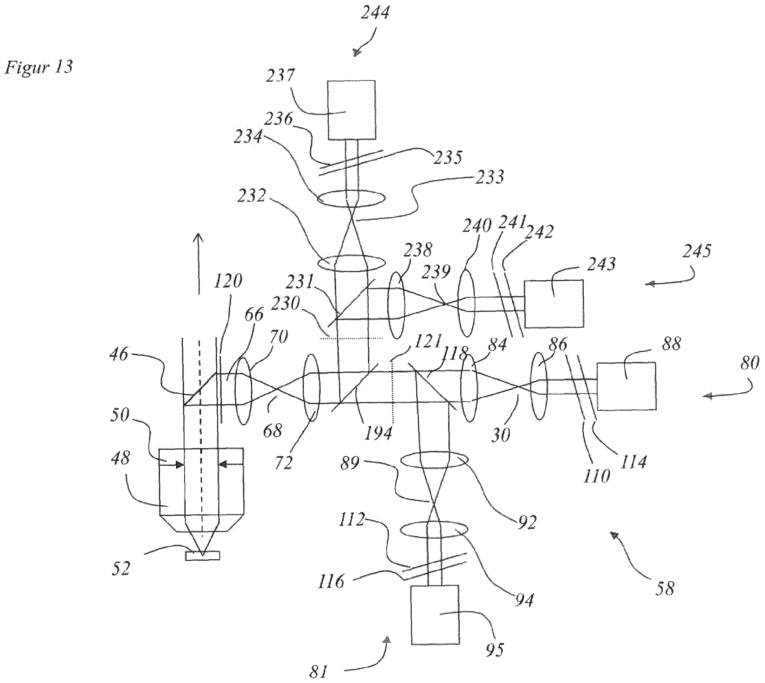

Figur 13 zeigt eine weitere Ausführungsform des Abtastmikroskops 20, das auf die Ausgestaltung nach Figur 11 Bezug nimmt. In der Anordnung nach Figur 11 sind die beiden Strahlteiler 194, 118 vorgesehen, die dem Ort 121 des Pupillenbildes vor-bzw. nachgeordnet sind. Geht man davon aus, dass die beiden Strahlteiler 118 und 194 gleiche Dispersion aufweisen, so ist auch ihr Abstand von dem Ort 121 des Pupillenbildes gleich. Die Anordnung nach Figur 11 umfasst insgesamt drei Detektionsmodule 80, 81 und 180.

In Erweiterung der Anordnung nach Figur 11 sieht die in Figur 13 dargestellte Ausführungsform insgesamt vier Detektionsmodule vor, nämlich die beiden Detektionsmodule 80, 81 sowie zwei weitere Detektionsmodule 244, 245. Wie die beiden Detektionsmodul 80, 81 weisen auch die Detektionsmodule 244, 245 jeweils zwei Linsen 232, 234 bzw. 238, 240, sowie ein schräg gestelltes Filterpaar, das aus einem Langpassfilter 235 bzw. 241 und einem Kurzpassfilter 236 bzw. 242 gebildet ist, und einen Detektor 237 bzw. 243 auf.

Die Ausführungsform nach Figur 13 verfügt ferner über einen weiteren Strahlteiler 231, der ein erfindungsgemäßes spektral selektives Bauelement 10 der in Figur 1 gezeigten Art bildet. Der Strahlteiler 231 ist wie der Strahlteiler 194 in dem Detektionsstrahlengang 66 schräg gestellt. Der Strahlteiler 118 ist einem Ort 230, in dem ein Bild der Objektivpupille 50 erzeugt wird, in einem Abstand nachgeordnet, der entsprechend den Bedingungen (1) oder (2) vorbestimmt ist. Geht man davon aus, dass der Strahlteiler 231 eine Dispersion aufweist, die gleich der Dispersion des Strahlteilers 194 ist, so haben die Strahlteiler 194, 231 den gleichen Abstand von dem Ort 230.

In der Anordnung nach Figur 13 bezeichnen die Bezugzeichen 233 und 239 Orte, in denen jeweils ein Zwischenbild der Probe 52 erzeugt wird.

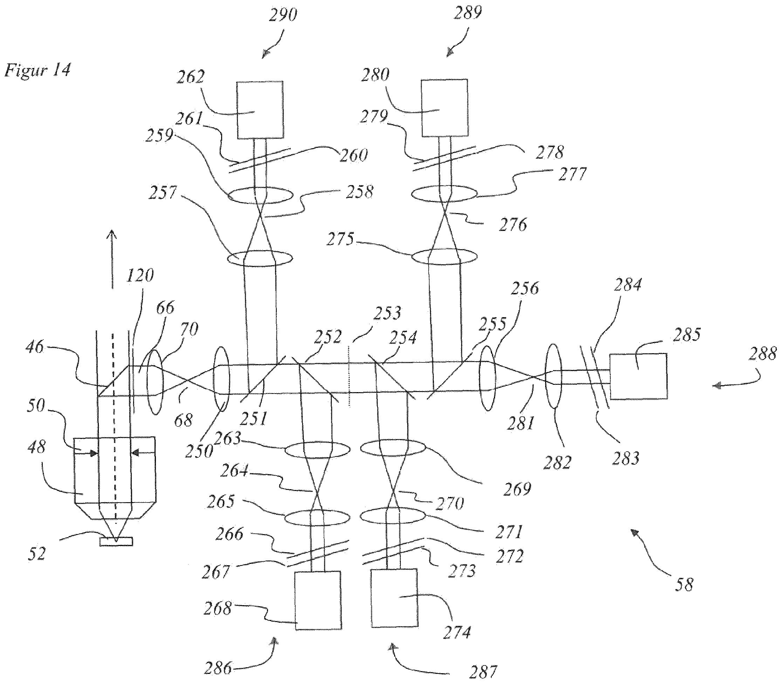

Figur 14 zeigt eine Ausführungsform, bei der Strahlteilerpaare 251, 252 bzw. 254, 255 vorgesehen sind, deren Strahlteiler unterschiedliche Dispersion und damit unterschiedliche Abstände von einem in Figur 14 mit 253 bezeichneten Ort der Pupillenabbildung aufweisen.

Die Ausführungsform nach Figur 14 umfasst insgesamt fünf Detektionsmodule 286, 287, 288, 289 und 290. Jedes dieser Detektionsmodule enthält zwei Linsen 263, 265, 269, 271, 256, 282, 275, 277, 257, 259 sowie ein schräg gestelltes Filterpaar, das aus einem Langpassfilter 266, 272, 283, 278, 260 und einem Kurzpassfilter 267, 273, 284, 279, 261 gebildet ist, und einen Detektor 268, 274, 285, 280, 262.

Wie weiter oben erwähnt, können die beiden Strahlteiler 251, 252 infolge ihrer unterschiedlichen Dispersion in unterschiedlichen Abständen vom Ort 253 der Pupillenabbildung angeordnet werden. Damit lassen sich in einer kompakten Anordnung dem Ort 253 der Pupillenabbildung mehrere Strahlteiler vorordnen. Entsprechendes gilt für die Nachordnung der beiden Strahlteiler 254, 255, die sich auf der anderen Seite des Orts 253 befinden.

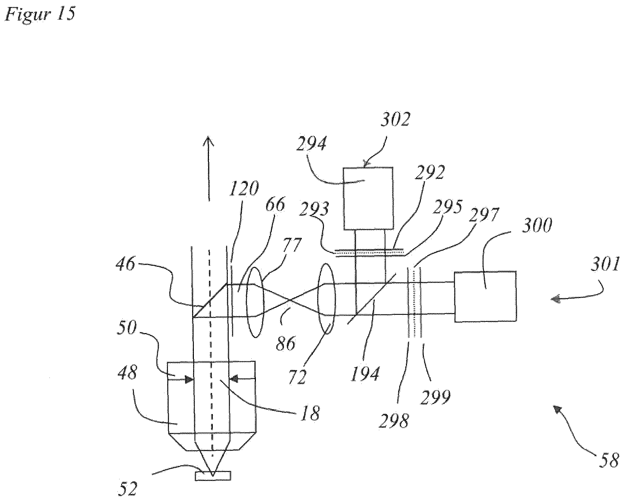

Figur 15 zeigt eine Ausführungsform mit zwei Detektionsmodulen 301, 302, die jeweils einen Detektor 300 bzw. 294 und ein dem jeweiligen Detektor vorgeordnetes Filterpaar aufweisen, das aus einem Langpassfilter 298 bzw. 295 und einem Kurzpassfilter 299 bzw. 292 gebildet ist. Im Unterschied zu den Ausführungsformen nach den Figuren 2 und 6 bis 14 schließen die Langpassfilter 298 bzw. 295 und Kurzpassfilter 299 bzw. 292 jeweils ohne weitere Abbildungsoptik an den Strahlteiler 194 an.

Um die Anordnung nach Figur 15 besonders kompakt zu halten, sind die Filterpaare 298, 299 bzw. 295, 292 im Detektionsstrahlengang 66 nicht schräg gestellt, sondern mit ihren Flächennormalen parallel zur optischen Achse des Detektionsstrahlengangs 66 angeordnet. Dementsprechend befinden sich die Filterpaare 298, 299 bzw. 295, 292 am Ort 297 bzw. 293 der Pupillenabbildung (oder jedenfalls in unmittelbarer Nähe dieses Orts).

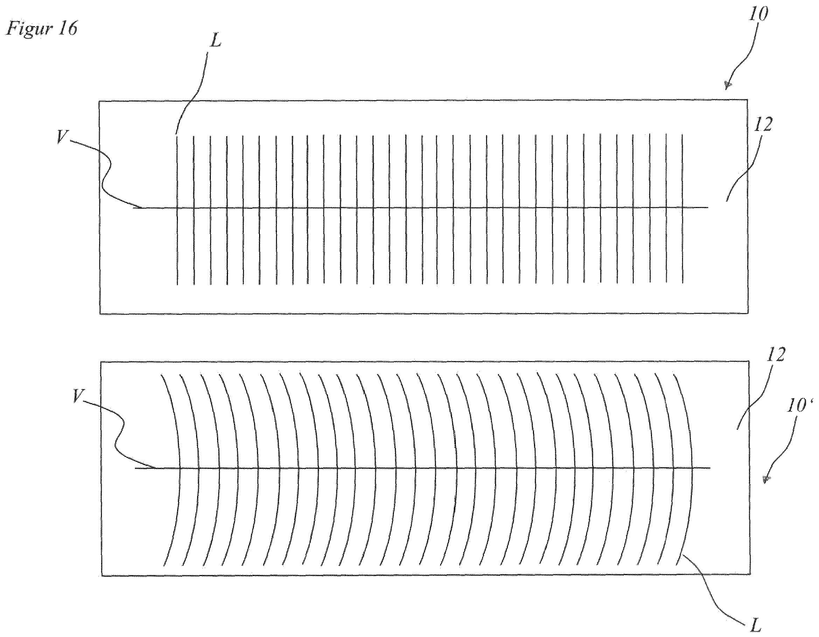

In Figur 16 ist eine Abwandlung des in Figur 1 gezeigten spektral selektiven Bauelementes 10 dargestellt. Diese mit 10' bezeichnete Abwandlung ist im unteren Teilbild der Figur 16 gezeigt. Zum Vergleich ist im oberen Teilbild eine der Figur 1 entsprechende Ausführungsform dargestellt.

In Figur 16 bezeichnet V wiederum die Variations- oder Dispersionsachse, längs der die spektrale Kante der Wirkfläche 12 des Bauelementes 10 variiert. Die in Figur 16 mit L bezeichneten, quer zur Variationsachse V verlaufenden Linien geben nach Art einer Höheliniendarstellung Orte gleicher spektraler Kante an. Wie dem oberen Teilbild der Figur 16 zu entnehmen ist, verlaufen die Linien L für das Bauelement 10 senkrecht zur Variationsachse V. Dies bedeutet, dass bei dem Bauelement 10 in einer Richtung senkrecht zur Variationsachse V keine Änderung der spektralen Kante auftritt.

Demgegenüber sind die Linien L bei dem abgewandelten Bauelement 10' in ihrem Verlauf quer zur Variationsachse V gekrümmt. Mithin tritt bei dem Bauelement 10' in einer Richtung senkrecht zur Variationsachse V eine Änderung der spektralen Kante auf. Diese Änderung der spektralen Kante senkrecht zur Variationsachse V kann in weiter oben erläuterter Weise genutzt werden, um dem Umstand Rechnung zu tragen, dass sich bei einer zweidimensionalen Abrasterung der Probe der tatsächliche Einfallswinkel des Detektionslichtbündels auf dem spektral selektiven Bauelement aus zwei Scanwinkeln zusammensetzt, die auf zueinander senkrechte Achsen Bezug nehmen.

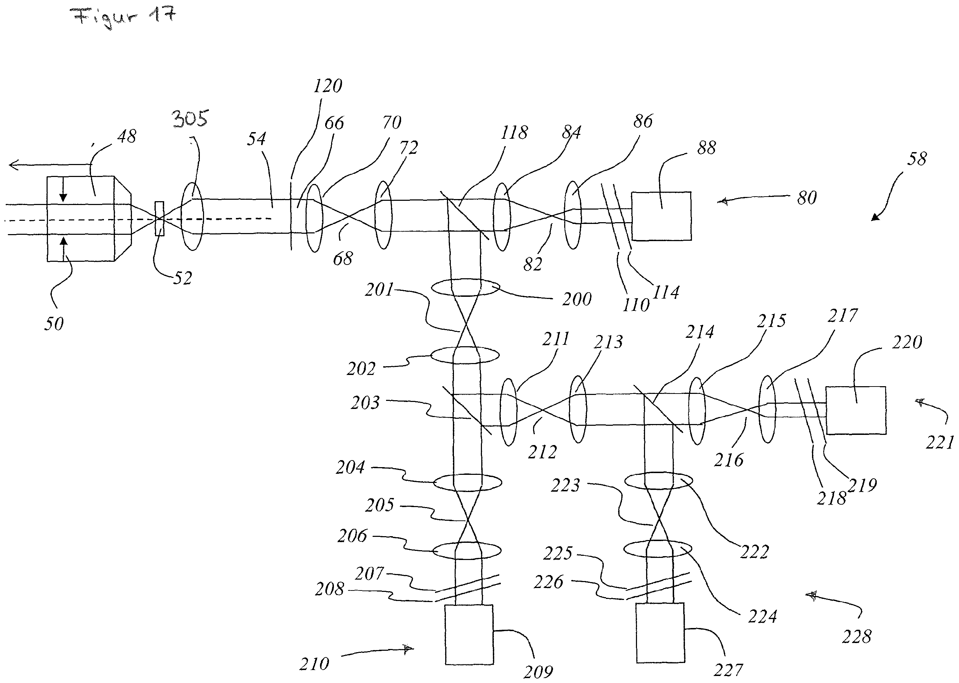

In Figur 17 ist schließlich eine weitere Ausführungsform des Abtastmikroskops gezeigt. Diese unterscheidet sich von den zuvor beschriebenen Ausführungsbeispielen, in denen das Objektiv 48 sowohl zur Beleuchtung als auch zur Detektion genutzt wird, dadurch, dass hier das Objektiv 48 allein der Beleuchtung der Probe 52 dient. Die Detektionsanordnung nach Figur 17 arbeitet demnach mit Detektionslicht, das nicht mehr zurück in das Objektiv 48 gelangt. Vielmehr ist in der Ausführungsform nach Figur 17 der Probe 52 eine Optik 305 nachgeordnet, die das Detektionslichtbündel 54 sammelt und weiter in Richtung der Detektionseinheiten 80, 210, 221 und 258 transportiert. Die Optik 305 ist beispielsweise als Objektiv oder Kondensor ausgeführt. In dieser Ausführungsform kann auf den in Figur 12 gezeigten Strahlteiler 46 verzichtet werden.

Die vorstehend unter Bezugnahme auf Figur 17 beschriebene, mit transmittiertem Licht arbeitende Detektionsanordnung nimmt auf das Ausführungsbeispiel nach Figur 12 Bezug. Es ist jedoch ausdrücklich darauf hinzuweisen, dass sämtliche zuvor beschriebenen Ausführungsbeispiele in der in Figur 17 dargestellten Art abgewandelt werden können.

Abschließend sei der Vollständigkeit halber noch einmal darauf hingewiesen, dass in vorstehend beschriebenen Detektionsanordnungen mit Ausnahme des Strahlteilers 46 und des Filters 120 sämtliche Strahlteiler und Filter, d.h. Kantenfilter, Langpassfilter und Kurzpassfilter, spektral selektive Bauelemente der erfindungsgemäßen Art bilden.

**Patentansprüche**

1.  Abtastmikroskop (20) mit

    einem in einem Beleuchtungsstrahlengang (26) angeordneten Objektiv (48) zum Fokussieren eines Beleuchtungslichtbündels (24) auf eine Probe (52),
    einer dem Objektiv (48) in dem Beleuchtungsstrahlengang (26) vorgeordneten Abtasteinheit (38) zum Ablenken des Beleuchtungslichtbündels (24) derart, dass das durch das Objektiv (48) fokussierte Beleuchtungslichtbündel (24) eine Abtastbewegung auf der Probe (52) ausführt, und
    einer in einem Detektionsstrahlengang (66) angeordneten Detektionseinheit (58) zum Empfangen durch die Abtasteinheit (38) nicht abgelenkten Detektionslichtbündels (54),
    wobei die Detektionseinheit (58) zur spektralen Beeinflussung des Detektionslichtbündels (54) mindestens ein spektral selektives Bauelement (10, 90, 96)
    enthält, das eine Wirkfläche (12) mit einer spektralen Kante aufweist, die monoton mit dem Ort des Einfalls des Detektionslichtbündels (54) auf der Wirkfläche (12) variiert,
    **dadurch gekennzeichnet, dass** die Wirkfläche (12) des spektral selektiven Bauelementes (10,90,96) in dem Detektionsstrahlengang (66) senkrecht zu dessen optischer Achse am Ort eines Bildes einer Objektivpupille (50) angeordnet ist, wobei der auf die optische Achse des Detektionsstrahlengangs bezogene Eintrittswinkel, unter dem das Detektionslichtbündel (54) auf die Wirkfläche (12) fällt und der in Folge der Abtastbewegung des Beleuchtungslichtbündels (24) variiert, gleich oder kleiner als 35° ist, oder
    dass die Wirkfläche (12) des spektral selektiven Bauelementes (10, 90, 96) in dem Detektionsstrahlengang (66) schräg zu dessen optischer Achse an einer Stelle angeordnet ist, an der eine monoton verlaufende Variation der spektralen Kante der Wirkfläche (12), die durch die in Folge der Abtastbewegung des Beleuchtungslichtbündels (24) auftretende Variation des Einfallwinkels, unter dem das Detektionslichtbündel (54) auf die Wirkfläche (12) fällt, verursacht ist, zumindest teilweise durch eine gegenläufige Variation der spektralen Kante der Wirkfläche (12) kompensiert ist, die durch eine Variation des Ortes, an dem das Detektionslichtbündel (54) auf die Wirkfläche (12) fällt, verursacht ist.

2.  Abtastmikroskop (20) nach Anspruch 1, **dadurch gekennzeichnet, dass** die Wirkfläche (12) des spektral selektiven Bauelementes (10, 90, 96) längs der optischen
    Achse des Detektionsstrahlengangs (66) einen Abstand ($\Delta z$) zum Ort des Bildes der Objektivpupille (50) aufweist, der in Abhängigkeit der Variation des Einfallswinkels des Detektionslichtbündels (54) vorbestimmt ist.

3.  Abtastmikroskop (20) nach Anspruch 2, **dadurch gekennzeichnet, dass** der Abstand $\Delta z > 0$ derart vorbestimmt ist, dass für alle Scanwinkel $\vartheta$ folgende Bedingung erfüllt ist:

$$\Delta z \leq 2\, \frac{ES(\vartheta,\varphi)}{ED}\, \frac{sin(\vartheta+\varphi)}{sin\,(\vartheta)}, \quad (1)$$

worin

ES($\vartheta$, $\varphi$) die bei dem Scanwinkel $\vartheta$ und einem Winkel $\varphi$ auftretende Variation der spektralen Kante der Wirkfläche (12) bezeichnet,

ED die Änderung der spektralen Kante pro Strecke auf der Wirkfläche (12) bezeichnet und

$\varphi$ den Winkel bezeichnet, unter dem die Wirkfläche (12) zur optischen Achse des Detektionsstrahlengangs (66) angeordnet ist.

4.  Abtastmikroskop (20) nach einem der vorhergehenden Ansprüche, **dadurch gekennzeichnet, dass** die Wirkfläche (12) des spektral selektiven Bauelementes in dem Detektionsstrahlengang (66) derart angeordnet ist, dass ihre Flächennormale zur optischen Achse des Detektionsstrahlengangs (66) um einen vorbestimmten Winkel geneigt ist, der gleich oder kleiner als 65° ist.

5.  Abtastmikroskop (20) nach einem der vorhergehenden Ansprüche, **dadurch gekennzeichnet, dass** die Wirkfläche (12) des spektral selektiven Bauelementes (10, 90, 96) derart ausgebildet ist, dass ihre spektrale Kante im Wesentlichen linear mit dem Einfallswinkel, unter dem das Detektionslichtbündel (54) auf die Wirkfläche (12) fällt, variiert.

6.  Abtastmikroskop (20) nach einem der vorhergehenden Ansprüche, **dadurch gekennzeichnet, dass** der entsprechend der Abtastbewegung des Beleuchtungslichtbündels (24) variierende Einfallswinkel, unter dem das Detektionslichtbündel (54) auf die Wirkfläche (12) des spektral selektiven Bauelementes (10, 90, 96) fällt, auf einen Winkelbereich beschränkt ist, in dem der Ort des Einfalls des Detektionslichtbündels (54) auf der Wirkfläche (12) näherungsweise linear mit dem Einfallswinkel variiert.

7.  Abtastmikroskop (20) nach einem der vorhergehenden Ansprüche, **dadurch gekennzeichnet, dass** das mindestens eine spektral selektive Bauelement (10, 90, 96) mindestens einen Strahlteiler und/oder mindestens einen Kantenfilter umfasst, wobei der mindestens eine Kantenfilter vorzugsweise mindestens einen Kurzpassfilter, vorzugsweise mindestens einen Langpassfilter und/oder vorzugsweise mindestens einen Bandpassfilter umfasst, wobei der Bandpassfilter vorzugsweise aus einem Kurzpassfilter und einem Langpassfilter gebildet ist, die längs der optischen Achse des Detektionsstrahlengangs (66) hintereinander angeordnet sind.

8.  Abtastmikroskop (20) nach einem der vorhergehenden Ansprüche, **dadurch gekennzeichnet, dass** die Wirkfläche (12) des spektral selektiven Bauelementes (10, 90, 96) derart ausgebildet ist, dass ihre spektrale Kante längs einer Variationsachse (V) linear oder nichtlinear mit dem Ort des Einfalls des Detektionslichtbündels (54) variiert.

9.  Abtastmikroskop (20) nach Anspruch 8, **dadurch gekennzeichnet, dass** die spektrale Kante der Wirkfläche (12) längs der Variationsachse (V) mit dem Ort des Einfalls des Detektionslichtbündels für den Fall, dass die Wirkfläche (12) am Ort eines Bildes der Objektivpupille (50) angeordnet ist, linear variiert und für den Fall, dass die Wirkfläche (12) an der Stelle, an der die durch die Variation des Einfallswinkels verursachte Variation der spektralen Kante kompensiert ist, angeordnet ist, nichtlinear variiert.

10. Abtastmikroskop (20) nach Anspruch 8 oder 9, **dadurch gekennzeichnet, dass** die Detektionseinheit eine dem spektral selektiven Bauelement (10, 90, 96) in dem Detektionsstrahlengang (66) vorgeordnete Optik aufweist, die in einer zur Variationsachse parallelen Richtung eine andere optische Wirkung als in einer zur Variationsachse senkrechten Richtung hat.

11. Abtastmikroskop (20) nach einem der vorhergehenden Ansprüche, **dadurch gekennzeichnet, dass** die Detektionseinheit (58) einen vorzugsweise modularen Aufbau mit mindestens zwei Detektionsmodulen (80, 81) hat, wobei das mindestens eine spektral selektive Bauelement mindestens einen Strahlteiler (74) umfasst, der das Detektionslichtbündel (54) spektral separiert den beiden Detektionsmodulen (80, 81) zuführt.

12. Abtastmikroskop (20) nach Anspruch 11, **dadurch gekennzeichnet, dass** der mindestens eine Strahlteiler mindestens zwei Strahlteiler (118, 194) umfasst, von denen einer in dem Detektionsstrahlengang (66) dem Bild der Objektivpupille (50) in einem vorbestimmten Abstand vorgeordnet und der andere dem Bild der Objektivpupille (50) im gleichen Abstand nachgeordnet ist.

13. Abtastmikroskop (20) nach Anspruch 12, **dadurch gekennzeichnet, dass** die Detektionseinheit (58) eine durch das mindestens eine spektral selektive Bauelement (10) gebildete Strahlteilerkaskade, die zumindest einen ersten Strahlteiler (118) und einen zweiten Strahlteiler (203) umfasst, sowie zumindest ein erstes Detektionsmodul (80), ein zweites Detektionsmodul (210) und ein drittes Detektionsmodul (221, 228) aufweist, wobei

der erste Strahlteiler (118) das Detektionslichtbündel (54) spektral separiert durch Transmission dem ersten Detektionsmodul (80) und durch Reflexion dem zweiten Strahlteiler (203) zuführt, und
der zweite Strahlteiler (203) das durch den ersten Strahlteiler (118) reflektierte Detektionslichtbündel (54) spektral separiert durch Transmission dem zweiten Detektionsmodul (210) und durch Reflexion direkt oder indirekt über einen weiteren Strahlteiler (214) dem dritten Detektionsmodul (221, 228) zuführt.

14. Abtastmikroskop (20) nach Anspruch 13, **dadurch gekennzeichnet, dass** die Strahlteiler (118, 203, 214) derart ausgebildet sind, dass die Wellenlängen der spektralen Anteile des Detektionslichtbündels (54), welche die Strahlteiler (118, 203, 214) den ihnen jeweils zugeordneten Detektionsmodulen (88, 210, 221, 228) durch Transmission zuführen, innerhalb der Strahlteilerkaskade sukzessive abnehmen.

15. Abtastmikroskop (20) nach einem der Ansprüche 12 bis 14, **gekennzeichnet durch** mindestens einen ersten Strahlteiler (194), der in dem Detektionsstrahlengang (66) dem Bild der Objektivpupille (50) vorgeordnet ist, und mindestens einen zweiten Strahlteiler (118), der in dem Detektionsstrahlengang (66) dem Bild der Objektivpupille (50) nachgeordnet ist.

16. Abtastmikroskop (20) nach Anspruch 15, **dadurch gekennzeichnet, dass** der erste und der zweite Strahlteiler (194, 118) gleiche Dispersion aufweisen und im gleichen Abstand von dem Bild der Objektpupille (50) angeordnet sind, wobei die Dispersion der Änderung der spektralen Kante pro Strecke auf der Wirkfläche (12) entspricht.

17. Abtastmikroskop (20) nach Anspruch 15 oder 16, **dadurch gekennzeichnet, dass** der mindestens eine erste Strahleiler mindestens zwei Strahlteiler (251, 252) umfasst, die dem Bild der Objektivpupille (50) in verschiedenen Abständen vorgeordnet sind und unterschiedliche Dispersion aufweisen, und/oder dass der mindestens eine zweite Strahleiler mindestens zwei Strahlteiler (254, 255) umfasst, die dem Bild der Objektivpupille (50) in verschiedenen Abständen nachgeordnetet sind und unterschiedliche Dispersion aufweisen.

18. Abtastmikroskop (20) nach Anspruch 12, **dadurch gekennzeichnet, dass** das mindestens eine spektral selektive Bauelement mindestens einen Kantenfilter (292, 295, 298, 299) umfasst, der in mindestens einem der Detektionsmodule (301, 302), das einen Detektor (294, 300) aufweist, ohne weitere Abbildungsoptik an den Strahlteiler (194) anschließt, wobei der mindestens eine Kantenfilter (292, 295, 298, 299) dem Detektor (294, 300) vorgeordnet ist und seine Wirkfläche (12) im Wesentlichen am Ort (293, 297) eines Bildes der Objektivpupille (50) angeordnet ist.

19. Abtastmikroskop (20) nach einem der vorhergehenden Ansprüche, **dadurch gekennzeichnet, dass** die Detektionseinheit (58) mindestens eine asphärische Linse enthält.

20. Abtastmikroskop (20) nach einem der vorhergehenden Ansprüche, **dadurch gekennzeichnet, dass** das die Wirkfläche (12) des spektral selektiven
Bauelementes (10, 90, 96) zusätzlich polarisationssensitiv ausgebildet ist.

21. Abtastmikroskop (20) nach einem der vorhergehenden Ansprüche, **dadurch gekennzeichnet, dass** das spektral selektive Bauelement (10, 90, 96) zum Ändern des
Ortes des Einfalls des Detektionslichtbündels (54) auf der Wirkfläche (12) verstellbar ist.

22. Abtastmikroskop (20) nach einem der vorhergehenden Ansprüche, **dadurch gekennzeichnet, dass** das Objektiv (48) sowohl zum Fokussieren des Beleuchtungslichtbündels (24) auf die Probe (52) als auch zum Empfangen des Detektionslichtbündels (54) vorgesehen ist, oder
dass das Objektiv (48) nur zum Fokussieren des Beleuchtungslichtbündels (24) auf die Probe (52) vorgesehen ist, wobei in dem Detektionsstrahlengang (66) eine Optik (305) zum Empfangen des Detektionslichtbündels (54) angeordnet ist.

**Claims**

1. Scanning microscope (20) comprising an objective (48) disposed in an illumination beam path (26) for focussing an illumination light beam (24) on a specimen (52),

a scanning unit (38) which is disposed upstream of the objective (48) in the illumination beam path (26) and which serves to deflect the illumination light beam (24) in such a way that the illumination light beam (24) focussed by way of the objective (48) carries out a scanning movement on the specimen (52), and

a detection unit (58) which is disposed in a detection beam path (66) and which serves to receive a detection light beam (54) that has not been deflected by the scanning unit (38),

the detection unit (58) containing at least one spectrally selective component (10, 90, 96) for spectrally influencing the detection light beam (54), said spectrally selective component having an effective surface (12) with a spectral edge that varies monotonically with the location of incidence of the detection light beam (54) on the effective surface (12),

**characterized in that** the effective surface (12) of the spectrally selective component (10, 90, 96) is disposed in the detection beam path (66), at right angles to its optical axis and at the location of an image of an objective pupil (50), the angle of incidence with respect to the optical axis of the detection beam path, at which the detection light beam (54) is incident on the effective surface (12) and which varies as a consequence of the scanning movement of the illumination light beam (24), being less than or equal to 35°,

or

**in that** the effective surface (12) of the spectrally selective component (10, 90, 96) is disposed in the detection beam path (66), obliquely with respect to its optical axis and at a location at which a monotonically progressing variation of the spectral edge of the effective surface (12), which is caused by the variation in the angle of incidence at which the detection light beam (54) is incident on the effective surface (12) as a consequence of the scanning movement of the illumination light beam (24), is at least partly compensated by a counteracting variation of the spectral edge of the effective surface (12) which is caused by a variation in the location at which the detection light beam (54) is incident on the effective surface (12) .

2. Scanning microscope (20) according to Claim 1, **characterized in that** the effective surface (12) of the spectrally selective component (10, 90, 96) has a distance ($\Delta z$) from the location of the image of the objective pupil (50) along the optical axis of the detection beam path (66), said distance being predetermined on the basis of the variation of the angle of incidence of the detection light beam (54).

3. Scanning microscope (20) according to Claim 2, **characterized in that** the distance $\Delta z > 0$ is predetermined such that the following condition is satisfied for all scanning angles $\vartheta$:

$$\Delta z \leq 2 \frac{ES(\vartheta,\varphi)}{ED} \frac{\sin(\vartheta+\varphi)}{\sin(\vartheta)}, \quad (1)$$

where

$ES(\vartheta,\varphi)$ denotes the variation of the spectral edge of the effective surface (12) occurring at the scanning angle $\vartheta$ and an angle $\varphi$,

$ED$ denotes the change in the spectral edge per unit distance on the effective surface (12), and

$\varphi$ denotes the angle at which the effective surface (12) is disposed in relation to the optical axis of the detection beam path (66).

4. Scanning microscope (20) according to any one of the preceding claims, **characterized in that** the effective surface (12) of the spectrally selective component is disposed in the detection beam path (66) such that its surface normal is inclined by a predetermined angle less than or equal to 65° with respect to the optical axis of the detection beam path (66).

5. Scanning microscope (20) according to any one of the preceding claims, **characterized in that** the effective surface (12) of the spectrally selective component (10, 90, 96) is designed such that its spectral edge varies substantially linearly with the angle of incidence at which the detection light beam (54) is incident on the effective surface (12).

6. Scanning microscope (20) according to any one of the preceding claims, **characterized in that** the angle of incidence which varies in accordance with the scanning movement of the illumination light beam (24) and at which the detection light beam (54) is incident on the effective surface (12) of the spectrally selective component (10, 90, 96) is restricted to an angle range within which the location of the incidence of the detection light beam (54) on the effective surface (12) varies approximately linearly with the angle of incidence.

7. Scanning microscope (20) according to any one of the preceding claims, **characterized in that** the at least one spectrally selective component (10, 90, 96) comprises at least one beam splitter and/or at least one edge filter, the at least one edge filter comprising preferably at least one short pass filter, preferably at least one long pass filter and/or preferably at least one bandpass filter, the bandpass filter preferably being formed by a short pass filter and a long pass filter which are disposed in succession along the optical axis of the detection beam path (66).

8. Scanning microscope (20) according to any one of the preceding claims, **characterized in that** the effective surface (12) of the spectrally selective component (10, 90, 96) is designed such that its spectral edge varies linearly or nonlinearly with the location of incidence of the detection light beam (54) along a variation axis (V).

9. Scanning microscope (20) according to Claim 8, **characterized in that** the spectral edge of the effective surface (12) varies linearly along the variation axis (V) with the location of incidence of the detection light beam for the case where the effective surface (12) is disposed at the location of an image of the objective pupil (50) and varies nonlinearly for the case where the effective surface (12) is disposed at the location at which the variation of the spectral edge caused by the variation of the angle of incidence is compensated.

10. Scanning microscope (20) according to Claim 8 or 9, **characterized in that** the detection unit has an optical unit disposed in the detection beam path (66) upstream of the spectrally selective component (10, 90, 96), said optical unit having different optical powers in a direction parallel to the variation axis and in a direction perpendicular to the variation axis.

11. Scanning microscope (20) according to one of the preceding claims, **characterized in that** the detection unit (58) has a preferably modular structure with at least two detection modules (80, 81), the at least one spectrally selective component comprising at least one beam splitter (74) which supplies the detection light beam (54) to the two detection modules (80, 81) in spectrally separated fashion.

12. Scanning microscope (20) according to Claim 11, **characterized in that** the at least one beam splitter comprises at least two beam splitters (118, 194), one of which being disposed upstream of the image of the objective pupil (50) in the detection beam path (66) at a predetermined distance and the other being disposed downstream of the image of the objective pupil (50) at the same distance.

13. Scanning microscope (20) according to Claim 12, **characterized in that** the detection unit (58) comprises a beam splitter cascade formed by the at least one spectrally selective component (10), said beam splitter cascade comprising at least a first beam splitter (118) and a second beam splitter (203) and having at least a first detection module (80), a second detection module (210) and a third detection module (221, 228),

   the first beam splitter (118) supplying the detection light beam (54) in spectrally separated fashion to the first detection module (80) by transmission and to the second beam splitter (203) by reflection, and
   the second beam splitter (203) supplying, in spectrally separated fashion, the detection light beam (54) reflected by the first beam splitter (118) to the second detection module (210) by transmission and to the third detection module (221, 228) by reflection, either directly or indirectly via a further beam splitter (214).

14. Scanning microscope (20) according to Claim 13, **characterized in that** the beam splitters (118, 203, 214) are designed such that the wavelengths of the spectral components of the detection light beam (54) which the beam splitters (118, 203, 214) supply to the respectively assigned detection modules (88, 210, 221, 228) by transmission successively decrease within the beam splitter cascade.

15. Scanning microscope (20) according to any one of Claims 12 to 14, **characterized by** at least one first beam splitter (194) which is disposed upstream of the image of the objective pupil (50) in the detection beam path (66) and at least one second beam splitter (118) which is disposed downstream of the image of the objective pupil (50) in the detection beam path (66).

16. Scanning microscope (20) according to Claim 15, **characterized in that** the first and the second beam splitter (194, 118) have the same dispersion and are disposed at the same distance from the image of the objective pupil (50), the dispersion corresponding to the change in the spectral edge per unit distance on the effective surface (12).

17. Scanning microscope (20) according to Claim 15 or 16, **characterized in that** the at least one first beam splitter comprises at least two beam splitters (251, 252) which are disposed upstream of the image of the objective pupil (50) at different distances and which have different dispersions, and/or **in that** the at least one second beam splitter comprises at least two beam splitters (254, 255) which are disposed downstream of the image of the objective pupil (50) at different distances and which have different dispersions.

18. Scanning microscope (20) according to Claim 12, **characterized in that** the at least one spectrally selective component comprises at least one edge filter (292, 295, 298, 299) which adjoins the beam splitter (194) without further imaging optical units in at least one of the detection modules (301, 302) which has a detector (294, 300), the at least one edge filter (292, 295, 298, 299) being disposed upstream of the detector (294, 300) and its effective surface (12) being substantially disposed at the location (293, 297) of an image of the objective pupil (50).

19. Scanning microscope (20) according to any one of the preceding claims, **characterized in that** the detection unit (58) contains at least one aspherical lens.

20. Scanning microscope (20) according to any one of the preceding claims, **characterized in that** the effective surface (12) of the spectrally selective component (10, 90, 96) additionally has a polarization-sensitive design.

21. Scanning microscope (20) according to any one of the preceding claims, **characterized in that** the spectrally selective component (10, 90, 96) is adjustable for the purposes of changing the location of incidence of the detection light beam (54) on the effective surface (12).

22. Scanning microscope (20) according to any one of the preceding claims, **characterized in that** the objective (48) is provided both for focussing the illumination light beam (24) on the specimen (52) and for receiving the detection light beam (54), or **in that** the objective (48) is only provided for focussing the illumination light beam (24) on the specimen (52), an optical unit (305) for receiving the detection light beam (54) being arranged in the detection beam path (66).

**Revendications**

1. Microscope à balayage (20), comprenant

   un objectif (48) disposé dans une trajectoire de faisceau d'éclairage (26) pour focaliser un faisceau de lumière d'éclairage (24) sur un échantillon (52),
   une unité de balayage (38) placée en amont de l'objectif (48) dans la trajectoire de faisceau d'éclairage (26) pour dévier le faisceau de lumière d'éclairage (24) de telle sorte que le faisceau de lumière d'éclairage (24) focalisé par l'objectif (48) effectue un mouvement de balayage sur l'échantillon (52), et
   une unité de détection (58) disposée dans une trajectoire de faisceau de détection (66) pour recevoir le faisceau de lumière de détection (54) non dévié par l'unité de balayage (38),
   dans lequel, pour influencer spectralement le faisceau de lumière de détection, l'unité de détection (58) comporte au moins un composant spectralement sélectif (10, 90, 96) qui présente une surface active (12) ayant une arête spectrale qui varie de façon monotone selon la position de l'incidence du faisceau de lumière de détection (54) sur la surface active (12),
   **caractérisé en ce que** la surface active (12) du composant spectralement sélectif (10, 90, 96) est disposée dans la trajectoire de faisceau de détection (66) perpendiculairement à son axe optique à la position d'une image d'une pupille d'objectif (50),
   l'angle d'entrée relatif à l'axe optique de la trajectoire de faisceau de détection sous lequel le faisceau de lumière de détection (54) tombe sur la surface active (12) et qui varie suite au mouvement de balayage du faisceau de lumière d'éclairage (24) étant égal ou inférieur à 35°,
   ou
   **en ce que** la surface active (12) du composant spectralement sélectif (10, 90, 96) dans la trajectoire de faisceau de détection (66) est disposée en oblique par rapport à l'axe optique de celui-ci à un emplacement où une variation d'allure monotone de l'arête spectrale de la surface active (12), qui est provoquée par la variation de l'angle d'entrée apparaissant suite au mouvement de balayage du faisceau de lumière d'éclairage (24) sous lequel le faisceau de lumière de détection (54) tombe sur la surface active (12), est compensée au moins partiellement par une variation contraire de l'arête spectrale de la surface active (12) qui est provoquée par une variation de la position où le faisceau de lumière de détection (54) tombe sur la surface active (12).

2. Microscope à balayage (20) selon la revendication 1, **caractérisé en ce que** la surface active (12) du composant spectralement sélectif (10, 90, 96) présente le long de l'axe optique de la trajectoire de faisceau de détection (66) une distance (Δz) par rapport à la position de l'image de la pupille d'objectif (50) qui est prédéterminée en fonction de la variation de l'angle d'incidence du faisceau de lumière de détection (54) .

3. Microscope à balayage (20) selon la revendication 2, **caractérisé en ce que** la distance Δz > 0 est prédéterminée de telle sorte que pour tous les angles de balayage $\vartheta$ la relation suivante soit satisfaite :

$$\Delta z \leq 2 \frac{ES(\vartheta,\varphi)}{ED} \frac{sin(\vartheta,\varphi)}{sin(\vartheta)}, \quad (1)$$

où

$ES(\vartheta,\varphi)$ désigne la variation de l'arête spectrale de la surface active (12) apparaissant à un angle de balayage $\vartheta$, ED désigne la variation de l'arête spectrale par trajet sur la surface active (12), et
$\varphi$ désigne l'angle sous lequel la surface active (12) est disposée par rapport à l'axe optique de la trajectoire de faisceau de détection (66).

4. Microscope à balayage (20) selon l'une quelconque des revendications précédentes, **caractérisé en ce que** la surface active (12) du composant spectralement sélectif est disposée dans la trajectoire de faisceau de détection (66) de telle sorte que sa normale à la surface est inclinée par rapport à l'axe optique de la trajectoire de faisceau de détection (66) selon un angle prédéterminé qui est égal ou inférieur à 65°.

5. Microscope à balayage (20) selon l'une quelconque des revendications précédentes, **caractérisé en ce que** la surface active (12) du composant spectralement sélectif (10, 90, 96) est réalisée de telle sorte que son arête spectrale varie de manière substantiellement linéaire avec l'angle d'incidence sous lequel le faisceau de lumière de détection (54) tombe sur la surface active (12).

6. Microscope à balayage (20) selon l'une quelconque des revendications précédentes, **caractérisé en ce que** l'angle d'incidence variant selon le mouvement de balayage du faisceau de lumière d'éclairage (24) sous lequel le faisceau de lumière de détection (54) tombe sur la surface active (12) du composant spectralement sélectif (10, 90, 96) est limité à une plage angulaire dans laquelle la position de l'incidence du faisceau de lumière de détection (54) sur la surface active (12) varie de manière approximativement linéaire avec l'angle d'incidence.

7. Microscope à balayage (20) selon l'une quelconque des revendications précédentes, **caractérisé en ce que** ledit au moins un composant spectralement sélectif (10, 90, 96) comprend au moins un séparateur de faisceau et/ou au moins un filtre à arêtes, ledit au moins un filtre à arêtes comprenant de préférence au moins un filtre passe-bas, de préférence au moins un filtre passe-haut et/ou de préférence au moins un filtre passe-bande, le filtre passe-bande étant de préférence formé à partir d'un filtre passe-bas et d'un filtre passe-haut qui sont disposés l'un après l'autre le long de l'axe optique de la trajectoire de faisceau de détection (66).

8. Microscope à balayage (20) selon l'une quelconque des revendications précédentes, **caractérisé en ce que** la surface active (12) du composant spectralement sélectif (10, 90, 96) est réalisée de telle sorte que son arête spectrale varie le long d'un axe de variation (V) de manière linéaire ou non linéaire avec la position de l'incidence du faisceau de lumière de détection (54).

9. Microscope à balayage (20) selon la revendication 8, **caractérisé en ce que** l'arête spectrale de la surface active (12) varie de manière linéaire le long de l'axe de variation (V) avec la position de l'incidence du faisceau de lumière de détection pour le cas où la surface active (12) est disposée dans la position d'une image de la pupille d'objectif (50), et varie de manière non linéaire pour le cas où la surface active (12) est disposée à l'emplacement où la variation de l'arête spectrale, provoquée par la variation de l'angle d'incidence, est compensée.

10. Microscope à balayage (20) selon la revendication 8 ou 9, **caractérisé en ce que** l'unité de détection présente une optique placée en amont du composant spectralement sélectif (10, 90, 96) dans la trajectoire de faisceau de détection (66) et qui produit un effet optique dans une direction parallèle à l'axe de variation différent de celui dans une direction perpendiculaire à l'axe de variation.

11. Microscope à balayage (20) selon l'une quelconque des revendications précédentes, **caractérisé en ce que** l'unité de détection (58) présente une structure de préférence modulaire comprenant au moins deux modules de détection (80, 81), ledit au moins un composant spectralement sélectif comprenant au moins un séparateur de faisceau (74) qui achemine le faisceau de lumière de détection (54) de manière spectralement séparée aux deux modules de détection (80, 81).

12. Microscope à balayage (20) selon la revendication 11, **caractérisé en ce que** ledit au moins un séparateur de faisceau comprend au moins deux séparateurs de faisceau (118, 194) dont l'un est disposé dans la trajectoire de faisceau de détection (66) en amont de l'image de la pupille d'objectif (50) à une distance prédéterminée et l'autre est placé à la même distance en aval de l'image de la pupille d'objectif (50).

13. Microscope à balayage (20) selon la revendication 12, **caractérisé en ce que** l'unité de détection (58) comprend une cascade de séparateurs de faisceau formée par ledit au moins un composant spectralement sélectif (10) et qui comprend au moins un premier séparateur de faisceau (118) et un deuxième séparateur de faisceau (203) ainsi qu'au moins un premier module de détection (80), un deuxième module de détection (210) et un troisième module de détection (221, 228), dans lequel

le premier séparateur de faisceau (118) achemine le faisceau de lumière de détection (54) de manière spectralement séparée au premier module de détection (80) par transmission et au deuxième séparateur de faisceau (203) par réflexion, et

le deuxième séparateur de faisceau (203) achemine le faisceau de lumière de détection (54) réfléchi par le premier séparateur de faisceau (118) de manière spectralement séparée au deuxième module de détection (210) par transmission et au troisième module de détection (221, 228) par réflexion directement ou indirectement par l'intermédiaire d'un autre séparateur de faisceau (214).

14. Microscope à balayage (20) selon la revendication 13, **caractérisé en ce que** le séparateur de faisceau (118, 203, 214) est réalisé de telle sorte que les longueurs d'onde des parts spectrales du faisceau de lumière de détection (54) que les séparateurs de faisceau (118, 203, 214) acheminent par transmission aux modules de détection (88, 210, 221, 228) qui leur sont associés respectivement diminuent successivement à l'intérieur de la cascade de séparateurs de faisceau.

15. Microscope à balayage (20) selon l'une quelconque des revendications 12 à 14, **caractérisé par** au moins un premier séparateur de faisceau (194) qui est placé dans la trajectoire de faisceau de détection (66) en amont de l'image de la pupille d'objectif (50), et par au moins un deuxième séparateur de faisceau (118) qui est placé dans la trajectoire de faisceau de détection (66) en aval de l'image de la pupille d'objectif (50).

16. Microscope à balayage (20) selon la revendication 15, **caractérisé en ce que** le premier et le deuxième séparateur de faisceau (194, 118) présentent la même dispersion et sont disposés à la même distance de l'image de pupille d'objectif (50), la dispersion correspondant à la variation de l'arête spectrale par trajet sur la surface active (12).

17. Microscope à balayage (20) selon la revendication 15 ou 16, **caractérisé en ce que** ledit au moins un premier séparateur de faisceau comprend au moins deux séparateurs de faisceau (251, 252) qui sont placés en amont de l'image de la pupille d'objectif (50) à différentes distances et présentent une dispersion différente, et/ou **en ce que** ledit au moins un deuxième séparateur de faisceau comprend au moins deux séparateurs de faisceau (254, 255) qui sont placés en aval de l'image de la pupille d'objectif (50) à différentes distances et présentent une dispersion différente.

18. Microscope à balayage (20) selon la revendication 12, **caractérisé en ce que** ledit au moins un composant spectralement sélectif comprend au moins un filtre à arêtes (292, 295, 298, 299) qui est adjacent au séparateur de faisceau (194) sans autre optique d'imagerie dans au moins l'un des modules de détection (301, 302) qui présente un détecteur (294, 300), ledit au moins un filtre à arêtes (292, 295, 298, 299) étant placé en amont du détecteur (294, 300), et sa surface active (12) étant disposée substantiellement dans la position (293, 297) d'une image de la pupille d'objectif (50).

19. Microscope à balayage (20) selon l'une quelconque des revendications précédentes, **caractérisé en ce que** l'unité de détection (58) comporte au moins une lentille asphérique.

20. Microscope à balayage (20) selon l'une quelconque des revendications précédentes, **caractérisé en ce que** la surface active (12) du composant spectralement sélectif (10, 90, 96) est en outre réalisée de manière sensible à la polarisation.

**21.** Microscope à balayage (20) selon l'une quelconque des revendications précédentes, **caractérisé en ce que** le composant spectralement sélectif (10, 90, 96) est réglable pour modifier la position de l'incidence du faisceau de lumière de détection (54) sur la surface active (12).

**22.** Microscope à balayage (20) selon l'une quelconque des revendications précédentes, **caractérisé en ce que** l'objectif (48) est prévu à la fois pour focaliser le faisceau de lumière d'éclairage (24) sur l'échantillon (52) et pour recevoir le faisceau de lumière de détection (54), ou
**en ce que** l'objectif (48) n'est prévu que pour focaliser le faisceau de lumière d'éclairage (24) sur l'échantillon (52), une optique (305) pour recevoir le faisceau de lumière de détection (54) étant disposée dans la trajectoire de faisceau de détection (66).

Fig. 1

Fig.2

Fig. 3

Fig. 4

Fig. 5

EP 3 308 210 B1

Figur 6

Fig. 7

Figur 8

EP 3 308 210 B1

Figur 9

EP 3 308 210 B1

Fig. 10

Figur 11

Figur 12

EP 3 308 210 B1

Figur 13

Figur 14

EP 3 308 210 B1

Figur 15

40

Figur 16

Figur 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006034908 A1

- US 20050017197 A1

**In der Beschreibung aufgeführte Nicht-Patentliteratur**

- **WARREN J. SMITH.** Modern Optical Engineering. McGraw-Hill, 2000, 208